# FASCICULE DE BREVET EUROPEEN

(11) **EP 1 311 591 B1**
(45) Date de publication et mention de la délivrance du brevet: **21.03.2007**
(21) Numéro de dépôt: 01969502.2
(22) Date de dépôt: 25.07.2001
(51) Int. Cl.: C08J 5/06, D07B 1/06, C23C 28/02, C23C 30/00, C08K 9/06, C08L 21/00

(54) **COMPOSITE (METAL/CAOUTCHOUC) POUR PNEUMATIQUE**
VERBUNDMATERIAL (METALL/KAUTSCHUK) FÜR REIFEN
(METAL/RUBBER) COMPOSITE FOR TYRE

(30) Priorité: 31.07.2000 FR 0010097
(43) Date de publication de la demande: 21.05.2003
(73) Titulaire: Société de Technologie Michelin, 63000 Clermont-Ferrand Cedex 09 (FR); MICHELIN Recherche et Technique S.A., 1763 Granges-Paccot (CH)
(72) Inventeur: GRIMBERG, Bruno, F-63720 Varennes-sur-Morge (FR); RAVOIRE, Yves, F-63000 Clermont-Ferrand (FR); TARDIVAT, Jean-Claude, F-63000 Clermont-Ferrand (FR); VO, Le, Tu, Anh, F-78180 Montigny-le-Bretonneux (FR)
(74) Mandataire: Ribière, Joel
(86) Numéro de dépôt international: PCT/EP2001/008568
(87) Numéro de publication internationale: WO 2002/010265

(56) Documents cités:
- EP-A- 0 978 531
- WO-A-91/01389
- WO-A-99/20705
- FR-A- 2 765 882
- US-A- 3 664 403
- US-A- 4 689 085
- DATABASE WPI Section Ch, Week 198902 Derwent Publications Ltd., London, GB; Class A12, AN 1989-012136 XP002164669 & JP 63 288283 A (YOKOHAMA RUBBER CO LTD), 25 novembre 1988 (1988-11-25)
- DATABASE WPI Section Ch, Week 198635 Derwent Publications Ltd., London, GB; Class A25, AN 1986-229473 XP002164670 & JP 61 159902 A (RINZAI KK), 19 juillet 1986 (1986-07-19)

## Description

La présente invention est relative aux composites (métal/caoutchouc) et en particulier aux interphases adhésives assurant, dans de tels composites, la liaison entre métal et caoutchouc.

Elle se rapporte plus particulièrement aux composites (acier au carbone/caoutchouc) vulcanisables au soufre et utilisables pour la fabrication des pneumatiques.

Les composites (métal/caoutchouc) pour pneumatiques sont connus et ont été décrits dans un très grand nombre de documents. Ils sont généralement constitués d'une matrice en caoutchouc renforcée de renforts, le plus souvent sous forme de fils ou assemblages de fils, en acier perlitique (ou ferrito-perlitique) au carbone, désigné ci-après "acier au carbone", dont la teneur en carbone est normalement comprise entre 0,35% et 1,2% (% en poids).

Ces composites, soumis à des contraintes très importantes lors du roulage des pneumatiques, notamment à des flexions ou variations de courbure répétées, doivent on le sait satisfaire à un grand nombre de critères techniques, parfois contradictoires, tels qu'uniformité, flexibilité, endurance en flexion et en compression, résistance à la traction, à l'usure et à la corrosion, et maintenir ces performances à un niveau très élevé aussi longtemps que possible. On comprend aisément que l'interphase adhésive entre caoutchouc et métal joue un rôle majeur dans la pérennité de ces performances.

Le procédé traditionnel pour relier les compositions de caoutchouc à l'acier au carbone consiste à revêtir la surface de l'acier au carbone avec du laiton (alliage cuivre-zinc), la liaison entre l'acier au carbone et la composition de caoutchouc étant assurée par sulfuration du laiton lors de la vulcanisation. Pour assurer une adhésion optimale, on utilise en outre fréquemment, dans la composition de caoutchouc, un additif promoteur d'adhésion tel qu'un sel de cobalt.

Le revêtement de laiton présente l'inconvénient connu que l'adhésion entre l'acier au carbone et la matrice de caoutchouc est susceptible de s'affaiblir au cours du temps, du fait de l'évolution progressive des sulfures sous l'effet des différentes sollicitations rencontrées, notamment thermiques et/ou mécaniques. En outre, la présence d'humidité dans les pneumatiques joue un rôle très important en accélérant le processus de dégradation ci-dessus. Enfin, l'utilisation de sel de cobalt rend les compositions de caoutchouc plus sensibles à l'oxydation et en augmente significativement le coût.

Certes, ont été proposés ici ou là des fils ou câbles d'acier au carbone ayant des revêtements alternatifs différents, en particulier des alliages de zinc tels que zinc-cobalt ou zinc-aluminium (voir par exemple Wire Journal International 31, n°10, octobre 1998, pp 78-82 ; WO91/01389 ou brevets équivalents FP-B1-0 483 198 ; US-A-5 342 699), mais jusqu'ici sans succès ni développement commercial réel.

En particulier, la demande WO91/01389 propose en remplacement du laiton un alliage zinc-aluminium spécifique, à faible pourcentage d'aluminium, connu depuis longtemps pour sa résistance à la corrosion, cet alliage pouvant être éventuellement recouvert par une seconde couche de métal ou d'alliage métallique, en particulier de cobalt, pour améliorer l'adhésion. Les fils et câbles décrits présentent certes une résistance à la corrosion améliorée, mais les niveaux d'adhésion atteints sont insuffisants, inférieurs à ceux offerts par un revêtement de laiton conventionnel.

Ainsi, malgré les inconvénients précités du laiton, ce dernier constitue encore aujourd'hui l'interphase adhésive de référence, celle de très loin la plus utilisée dans les composites (acier au carbone/caoutchouc) des pneumatiques, en particulier dans les armatures de carcasse ou de sommet de ces derniers.

Or, la Demanderesse a trouvé lors de ses recherches un nouveau composite (acier au carbone/caoutchouc) qui, grâce à une interphase adhésive particulière, améliore sensiblement la performance globale en adhésion des composites (acier au carbone/caoutchouc) utilisés dans les pneumatiques, comparée à celle des composites conventionnels utilisant du laiton comme interphase adhésive. La longévité des pneumatiques peut être ainsi améliorée.

En conséquence, un premier objet de l'invention est un composite (métal/caoutchouc) comportant une matrice de caoutchouc renforcée par un corps métallique adhérent à la matrice de caoutchouc par l'intermédiaire d'une interphase adhésive, caractérisé par les points suivants :
a) la matrice de caoutchouc est à base d'élastomère diénique ;
b) le métal est un acier au carbone dont la teneur (% en poids) en carbone est comprise entre 0,35 et 1,2%;
c) pour constituer l'interphase adhésive, l'acier au carbone est revêtu d'une couche métallique intermédiaire porteuse d'oxydes ou hydroxydes d'aluminium, elle-même recouverte d'un film d'organosilane assurant, en tant qu'agent de couplage, la liaison entre les oxydes ou hydroxydes d'aluminium d'une part, et la matrice de caoutchouc d'autre part.

L'invention concerne également l'utilisation d'un tel composite pour le renforcement d'articles ou de produits semi-finis en caoutchouc, par exemple des nappes, des tuyaux, des courroies, des bandes transporteuses, des pneumatiques.

Le composite selon l'invention est particulièrement destiné aux armatures de renforcement du sommet, de la carcasse ou de la zone bourrelet de pneumatiques radiaux destinés à des véhicules tourisme ou des véhicules industriels choisis parmi camionnettes, "Poids lourd" - i.e., métro, bus, engins de transport routier (camions, tracteurs, remorques), véhicules hors-la-route - , engins agricoles ou de génie civil, avions, autres véhicules de transport ou de manutention. Il est plus avantageusement utilisé dans les armatures de carcasse des pneumatiques pour véhicules industriels tels que camionnettes ou Poids lourd, ainsi que dans les armatures de sommet des pneumatiques destinés tant à des véhicules tourisme qu'à des véhicules industriels.

L'invention concerne en outre ces articles ou produits semi-finis en caoutchouc eux-mêmes, lorsqu'ils comportent un composite conforme à l'invention. L'invention montre en particulier tout son intérêt dans les armatures de carcasse des pneumatiques pour véhicules Poids lourd dont on attend aujourd'hui, grâce aux progrès techniques du rechapage, qu'elles soient capables d'endurer plus d'un million de kilomètres.

L'invention concerne également, en soi, un corps métallique en acier au carbone recouvert d'une couche adhésive capable d'adhérer à une matrice en caoutchouc à base d'élastomère diénique, caractérisé par les points suivants :
a) la teneur en carbone de l'acier est comprise entre 0,35 et 1,2%;
b) la couche adhésive est constituée d'une couche métallique porteuse d'oxydes ou hydroxydes d'aluminium, elle-même recouverte d'un film d'organosilane au moins bifonctionnel susceptible d'assurer, en tant qu'agent de couplage, la liaison entre les oxydes ou hydroxydes d'aluminium d'une part, et la matrice de caoutchouc d'autre part.

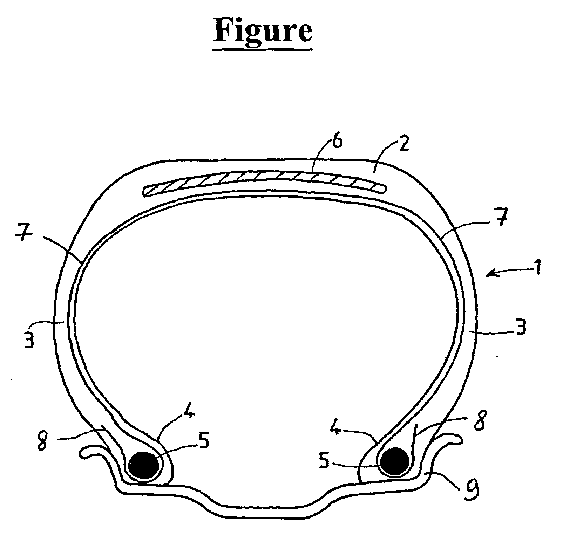

L'invention ainsi que ses avantages seront aisément compris à la lumière de la description et des exemples de réalisation qui suivent, ainsi que de la figure schématique relative à ces exemples qui représente une coupe radiale d'un pneumatique Poids lourd à armature de carcasse radiale.

### I. MESURES ET TESTS

### I-1. Mesures dynamométriques

En ce qui concerne les renforts (fils ou câbles) métalliques, les mesures de force à la rupture notée Fm (charge maximale en N), de résistance à la rupture notée Rm (en MPa) et d'allongement à la rupture noté At (allongement total en %) sont effectuées en traction selon la norme ISO 6892 de 1984. En ce qui concerne les compositions de caoutchouc, les mesures de module sont effectuées en traction, sauf indication contraire selon la norme ASTM D 412 de 1998 (éprouvette "C") ; on mesure en seconde élongation (i.e., après un cycle d'accommodation) les modules sécants vrais c'est-à-dire ramenés à la section réelle de l'éprouvette à 10% d'allongement, notés E10 et exprimés en MPa (conditions normales de température et d'hygrométrie selon la norme ASTM D 1349 de 1999).

### I-2. Test d'adhésion

La qualité de la liaison entre le renfort métallique et la matrice de caoutchouc est appréciée par un test dans lequel on mesure la force, dite force d'arrachement, nécessaire pour extraire le renfort métallique de la matrice de caoutchouc, à l'état vulcanisé.

Le composite (métal/caoutchouc) utilisé dans ce test est un bloc de composition de caoutchouc, constitué de deux plaques de dimension 300 mm par 150 mm (millimètres) et d'épaisseur 3,5 mm, appliquées l'une sur l'autre avant la cuisson ; l'épaisseur du bloc résultant est alors de 7 mm. C'est lors de la confection de ce bloc que les renforts, par exemple au nombre de douze, sont emprisonnés entre les deux plaques crues ; seule une longueur de renfort déterminée, par exemple de 12,5 mm, est laissée libre pour venir au contact de la composition de caoutchouc à laquelle cette longueur de renfort se liera pendant la cuisson ; le reste de la longueur des renforts est isolé de la composition de caoutchouc (par exemple à l'aide d'un film plastique ou métallique) pour empêcher toute adhésion en dehors de la zone de contact déterminée. Chaque renfort traverse le bloc de caoutchouc de part en part, au moins une de ses extrémités libres étant conservée de longueur suffisante (au moins 5 cm, par exemple entre 5 et 10 cm) pour permettre le tractionnement ultérieur du renfort.

Le bloc comportant les douze renforts est alors placé dans un moule adapté puis cuit pendant 40 minutes à 150°C, sous une pression d'environ 11 bars.

Après cuisson du composite, on applique, le cas échéant, les conditions de vieillissement accéléré qui suivent, permettant de déterminer la résistance des échantillons à l'action combinée de la chaleur et de l'eau d'une part, d'une atmosphère corrosive d'autre part :
- soit un vieillissement dit "humide": les blocs de caoutchouc sont placés dans une étuve à une température de 40°C et sous une humidité relative de 60%, pendant une durée déterminée pouvant varier par exemple de 3 à 17 semaines;
- soit un vieillissement dit "humide et corrosif': les blocs de caoutchouc sont placés dans une étuve à une température de 70°C et sous une humidité relative de 100%, pendant trois semaines ; à l'issue de ce premier vieillissement, on immerge pendant 4 jours une moitié du bloc de caoutchouc dans de l'eau à 30°C saturée en chlorure de sodium (environ 3-4% de sel) ; la moitié non immergée est celle qui porte l'extrémité libre de renfort destinée au tractionnement pour mesure de l'adhésion résiduelle;
- soit un vieillissement dit "corrosif': on immerge directement les blocs de caoutchouc dans la solution saline, comme indiqué ci-dessus, pendant un temps déterminé pouvant varier par exemple de 4 jours à plusieurs semaines.

A l'issue de la cuisson et du vieillissement ultérieur éventuel, le bloc est découpé en éprouvettes servant d'échantillons, contenant chacune un renfort que l'on tractionne hors du bloc de caoutchouc, à l'aide d'une machine de traction ; la vitesse de traction est de 50 mm/min ; on caractérise ainsi l'adhérence par la force nécessaire pour arracher le renfort hors de l'éprouvette, à une température de 20°C ; la force d'arrachement, notée ci-après Fa, représente la moyenne des 12 mesures correspondant aux 12 renforts du composite.

### I-3. Test courroie

Le test "courroie" est un test de fatigue connu qui a été décrit par exemple dans la demande EP-A-362 570, les renforts à tester, en général sous forme de câbles, étant incorporés dans une matrice de caoutchouc que l'on vulcanise.

Son principe est le suivant : le composite (métal/caoutchouc) est une courroie sans fin réalisée avec un mélange connu à base de caoutchouc, semblable à ceux qui sont couramment utilisés pour les armatures de renforcement des carcasses de pneumatiques radiaux, cette courroie étant renforcée de câbles dont l'axe est orienté selon la direction longitudinale de la courroie ; les câbles sont séparés des faces de cette courroie par une épaisseur de gomme d'environ 1 mm. Lorsque la courroie est disposée de façon à former un cylindre de révolution, le câble forme un enroulement en hélice de même axe que ce cylindre (par exemple, pas de l'hélice égal à environ 2,5 mm).

On fait ensuite subir à cette courroie les sollicitations suivantes : on fait tourner la courroie autour de deux galets, de telle sorte que chaque portion élémentaire de chaque câble soit soumise à une tension de 12% de la force rupture initiale et subisse des cycles de variation de courbure qui la font passer d'un rayon de courbure infini à un rayon de courbure de 40 mm, ceci pendant 50 millions de cycles. Le test est réalisé sous une atmosphère contrôlée, la température et l'humidité de l'air au contact de la courroie étant maintenues à environ 20°C et 60% d'humidité relative. La durée des sollicitations pour chaque courroie est de l'ordre de trois semaines. A la fin de ces sollicitations, on extrait les câbles des courroies, par décorticage, et on mesure la force à la rupture résiduelle des câbles (et celle de leurs fils) ainsi fatigués.

On réalise d'autre part une courroie identique à la précédente et on la décortique de la même façon que précédemment, mais cette fois sans la soumettre au test de fatigue. On mesure ainsi la force rupture initiale des câbles (et celle de leurs fils) non fatigués.

On calcule finalement la déchéance de force-rupture après fatigue (notée ΔFm et exprimée en %), en comparant la force-rupture résiduelle à la force-rupture initiale.

Cette déchéance ΔFm est de manière connue due à la fatigue et à l'usure du composite causée par l'action conjointe des sollicitations et de l'eau provenant de l'air ambiant, ces conditions étant comparables à celles auxquelles sont soumis les composites (métal/caoutchouc) dans des armatures de carcasses des pneumatiques.

### II. DESCRIPTION DETAILLEE DE L'INVENTION

Les composites (métal/caoutchouc) selon l'invention consistent en une matrice de caoutchouc renforcée par un corps métallique en acier au carbone.

L'interphase adhésive (acier au carbone/caoutchouc) est assurée par une couche métallique intermédiaire, déposée sur l'acier au carbone, porteuse d'oxydes ou hydroxydes d'aluminium, cette couche métallique intermédiaire étant elle-même recouverte d'un film d'organosilane assurant, en tant qu'agent de couplage, la liaison entre les oxydes ou hydroxydes d'aluminium d'une part, et la matrice de caoutchouc d'autre part.

### II-1. Matrice de caoutchouc

La matrice est une composition de caoutchouc à base (i.e., formée) d'au moins un élastomère diénique et comportant, outre cet élastomère diénique, tous les ingrédients habituels tels que charge renforçante, système de réticulation et autres additifs utilisables dans les compositions de caoutchouc pour pneumatiques.

### A) Elastomère diénique

Par élastomère "diénique", on entend de manière connue un élastomère issu au moins en partie (i.e. un homopolymère ou un copolymère) de monomères diènes c'est-à-dire de monomères porteurs de deux doubles liaisons carbone-carbone, conjuguées ou non.

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, l'élastomère diénique du composite conforme à l'invention est préférentiellement choisi dans le groupe constitué par les polybutadiènes, le caoutchouc naturel, les polyisoprènes de synthèse, les différents copolymères de butadiène, les différents copolymères d'isoprène, et les mélanges de ces élastomères.

Parmi les polybutadiènes, conviennent en particulier ceux ayant une teneur en unités -1,2 comprise entre 4% et 80% ou ceux ayant une teneur en cis-1,4 supérieure à 80%. Parmi les polyisoprènes de synthèse, conviennent en particulier les cis-1,4-polyisoprènes, de préférence ceux ayant un taux de liaisons cis-1,4 supérieur à 90%. Parmi les copolymères de butadiène ou d'isoprène, on entend en particulier les copolymères obtenus par copolymérisation d'au moins l'un de ces deux monomères avec un ou plusieurs composés vinyle-aromatique ayant de 8 à 20 atomes de carbone. A titre de composés vinyle-aromatiques conviennent par exemple le styrène, l'ortho-, méta-, para-méthylstyrène, le mélange commercial "vinyletoluène", le para-tertiobutylstyrène, les méthoxystyrènes, les chlorostyrènes, le vinylmésitylène, le divinylbenzène, le vinylnaphtalène. Les copolymères peuvent contenir entre 99% et 20% en poids d'unités diéniques et entre 1% et 80% en poids d'unités vinyle-aromatiques. Parmi les copolymères de butadiène ou d'isoprène ci-dessus, on citera préférentiellement les copolymères de butadiène-styrène, les copolymères d'isoprène-butadiène, les copolymères d'isoprène-styrène ou les copolymères d'isoprène-butadiène-styrène.

En résumé, convient de préférence un élastomère diénique choisi dans le groupe des élastomères diéniques fortement insaturés constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène-styrène (SIR), les copolymères de butadiène-styrène-isoprène (SBIR) et les mélanges de ces élastomères.

Les composites conformes à l'invention sont préférentiellement destinés aux pneumatiques, en particulier aux armatures de carcasse des pneumatiques pour véhicules industriels tels que camionnettes ou Poids lourd, ainsi qu'aux armatures de sommet des pneumatiques destinés tant à des véhicules tourisme qu'à des véhicules industriels.

On utilise alors, de préférence, des matrices à base de caoutchouc naturel ou de polyisoprène de synthèse. On entend par là des matrices de caoutchouc dans lesquelles l'élastomère diénique est constitué majoritairement (i.e., à plus de 50% en poids) de caoutchouc naturel, de polyisoprène de synthèse ou d'un mélange de ces élastomères. Avantageusement, l'élastomère diénique est constitué exclusivement de caoutchouc naturel, de polyisoprène de synthèse ou d'un mélange de ces élastomères.

Mais on peut aussi utiliser, selon un autre mode de réalisation avantageux de l'invention, des coupages (mélanges) de ces polyisoprènes avec d'autres élastomères diéniques fortement insaturés, notamment avec des élastomères SBR ou BR tels que précités.

Bien entendu, les matrices de caoutchouc des composites de l'invention peuvent contenir un seul ou plusieurs élastomère(s) diénique(s), ce(s) demier(s) pouvant être utilisé(s) en association avec tout type d'élastomère synthétique autre que diénique, voire avec des polymères autres que des élastomères, par exemple des polymères thermoplastiques.

### B) Autres constituants

Les matrices de caoutchouc des composites conformes à l'invention comportent également tout ou partie des additifs habituellement utilisés dans les matrices de caoutchouc destinées à la fabrication de pneumatiques, tels que des charges renforçantes comme le noir de carbone ou la silice, des agents anti-vieillissement, par exemple des antioxydants, des huiles d'extension, des plastifiants ou des agents facilitant la mise en oeuvre des compositions à l'état cru, un système de réticulation à base soit de soufre, soit de donneurs de soufre et/ou de peroxyde, des accélérateurs, des activateurs ou retardateurs de vulcanisation, des accepteurs et donneurs de méthylène, des résines, des systèmes promoteurs d'adhésion connus du type "RFS" (résorcinol-formaldéhyde-silice) ou sels métalliques, notamment sels de cobalt.

On pourra par exemple utiliser une résine renforçante dans le but d'assurer la liaison entre le film d'organosilane et la composition de caoutchouc elle-même, par l'intermédiaire de cette résine renforçante, cette dernière pouvant être obtenue *in situ*, lors de la cuisson de la composition de caoutchouc. La composition contient alors, avant la cuisson, les constituants de base de cette résine, par exemple un accepteur de méthylène comme le résorcinol et un donneur de méthylène (agent durcisseur) comme l'hexaméthylènetétramine ("HMT") ou encore l'hexaméthoxyméthylmélamine ("HMMM", encore notée "H3M").

Les termes "accepteur de méthylène" et "donneur de méthylène" sont bien connus de l'homme du métier et largement utilisés pour désigner des composés aptes à réagir ensemble pour générer par condensation une résine renforçante tridimensionnelle. Le terme "accepteur de méthylène" désigne le réactant avec lequel le composé donneur de méthylène réagit par formation de ponts méthylène (-CH2-), lors de la cuisson de la composition, conduisant ainsi à la formation *in situ* d'un réseau résine tridimensionnel ; à cet accepteur de méthylène doit être associé un agent durcisseur, apte à le réticuler ou durcir, encore appelé communément "donneur de méthylène". La réticulation de la résine est alors provoquée lors de la cuisson de la matrice de caoutchouc, par formation de ponts (-CH₂-).

La résine utilisée est alors préférentiellement adaptée à la nature de l'organosilane utilisé.

Par exemple, si l'organosilane choisi contient une fonction aminée, la composition de caoutchouc contiendra avantageusement une résine renforçante du type phénol-formol ou une résine de type résorcinol-formol, le formol pouvant être remplacé par d'autres donneurs de méthylène.

Si l'organosilane choisi contient une fonction mercapto, polysulfure, azidure, alcène ou alcène activé, la composition pourra alors contenir un simple système de réticulation (par exemple le soufre, un accélérateur de vulcanisation, un peroxyde), l'organosilane fonctionnalisé réagissant alors directement avec le caoutchouc lors de la vulcanisation.

Pour renforcer encore les performances du composite de l'invention, un mode de réalisation particulièrement préférentiel de l'invention consiste à incorporer, aux matrices de caoutchouc, un composé bismaléimide. Ce type de composé, utilisable sans agent durcisseur, possède une cinétique de cuisson bien adaptée à celle des pneumatiques, il est susceptible d'activer la cinétique d'adhésion et d'améliorer encore, dans les composites conformes à l'invention, l'endurance en conditions de vieillissement humide des interphases adhésives.

On rappelle que les bismaléimides répondent, de manière connue, à la formule suivante: 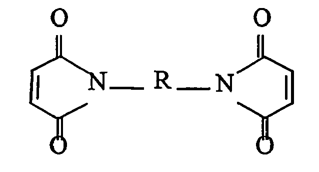 dans laquelle R est un radical hydrocarboné, aromatique ou aliphatique, cyclique ou acyclique, substitué ou non substitué, un tel radical pouvant comporter un hétéroatome choisi parmi O, N et S ; ce radical R comporte de préférence de 2 à 24 atomes de carbone.

On utilise plus préférentiellement une bismaléimide choisie dans le groupe constitué par les N,N'-éthylène-bismaléimides, N,N'-hexaméthylène-bismaléimides, N,N'-(m-phénylène)-bismaléimides, N,N'-(p-phénylène)-bismaléimides, N,N'-(p-tolylène)-bismaléimides, N,N'-(méthylènedi-p-phénylène)-bismaléimides, les N,N'-(oxydi-p-phénylène)-bismaléimides et les mélanges de ces composés. De telles bismaléimides sont bien connues de l'homme du métier et ont été décrites par exemple dans FR-A-2 611 209 ou US-A-4 818 601, EP-A-0 345 825 ou US-A-4 803 250, EP-A-0 564 966, US-A-5 300 585.

Dans le cas où une résine renforçante ou une bismaléimide est utilisée, elle est présente dans le composite de l'invention à un taux préférentiel compris entre 0,1 et 20%, plus préférentiellement entre 1 et 8% en poids de composition de caoutchouc. Pour des taux supérieurs aux maxima indiqués, on s'expose plus ou moins à des risques de rigidification excessive des compositions, et donc à une fragilisation des composites ; pour des taux inférieurs aux minima indiqués, l'effet technique visé risque d'être insuffisant.

### II-2. Corps métallique

Comme indiqué précédemment, le corps métallique du composite de l'invention est un renfort en acier au carbone dont la teneur en carbone (% en poids d'acier) est comprise entre 0,35 et 1,2%, de préférence entre 0,50 et 1,1%.

Par "renfort", il faut entendre ici, de manière connue, tout élément de renforcement apte à renforcer la matrice de caoutchouc. Ce renfort peut se présenter sous différentes formes, par exemple sous la forme d'un fil unitaire (monofil), d'un feuillard ou d'un ruban, d'un assemblage de fils tel qu'un câble, voire à l'état de fibres courtes.

Dans les pneumatiques de l'invention, ce renfort se présente le plus souvent sous la forme d'un assemblage de fils, par exemple un câble ou un toron fabriqué avec des dispositifs et procédés de câblage ou toronnage connus de l'homme du métier, qui ne sont pas décrits ici pour la simplicité de l'exposé.

La teneur en carbone est plus préférentiellement comprise entre 0,60% et 1,0%, encore plus préférentiellement encore entre 0,68% et 0,95% ; ces teneurs représentent un bon compromis entre les propriétés mécaniques requises pour le pneumatique et la faisabilité des fils. Il est à noter que dans les applications où les plus hautes résistances mécaniques ne sont pas nécessaires, on pourra utiliser avantageusement des aciers au carbone dont la teneur en carbone est comprise entre 0,50% et 0,68%, notamment varie de 0,55% à 0,60%, de tels aciers étant finalement moins coûteux car plus faciles à tréfiler.

Bien entendu, l'homme du métier saura adapter la composition de l'acier au carbone en fonction de ses besoins propres particuliers, en utilisant par exemple des aciers au carbone micro-alliés contenant des éléments d'addition spécifiques tels que Cr, Ni, Co, V, ou divers autres éléments connus (voir par exemple Research Disclosure 34984 - *"Micro-alloyed steel cord constructions for tyres" -* mai 1993 ; Research Disclosure 34054 - *"High tensile strength steel cord constructions for tyres* - août 1992).

Lorsque les composites de l'invention sont utilisés pour renforcer des armatures de carcasse ou de sommet de pneumatiques radiaux, les renforts utilisés sont de préférence des assemblages (torons ou câbles) de fils fins en acier au carbone ayant :
- une résistance en traction supérieure à 2000 MPa, plus préférentiellement supérieure à 2500 MPa, en particulier supérieure à 3000 MPa ; l'homme du métier sait comment fabriquer des fils fins présentant une telle résistance, en ajustant notamment la teneur en carbone de l'acier et les taux d'écrouissage final de ces fils ;
- pour un bon compromis résistance/tenue en flexion/faisabilité, un diamètre φ compris entre 0,12 et 0,40 mm, plus préférentiellement compris dans un domaine allant de 0,15 à 0,26 mm environ lorsque le composite est destiné à renforcer une armature de carcasse, dans un domaine allant de 0,20 à 0,35 mm environ lorsque le composite est destiné à renforcer une armature de sommet.

Lorsque les composites de l'invention sont utilisés pour renforcer des zones bourrelet de pneumatiques, les renforts peuvent se présenter notamment sous forme de tringles constituées de fils en acier au carbone, unitaires ou assemblés, ces fils ayant :
- une résistance en traction supérieure à 1500 MPa, plus préférentiellement supérieure à 2000 MPa ;
- un diamètre φ (ou une dimension caractéristique, s'il s'agit d'un fil autre que cylindrique) compris entre 0,5 et 3 mm, plus préférentiellement entre 0,8 et 2,2 mm.

### II-3. Interphase adhésive

Comme indiqué précédemment, l'adhésion entre le renfort en acier au carbone et la matrice de caoutchouc est assurée par une interphase adhésive spécifique.

Cette interphase adhésive spécifique est formée d'une première couche métallique dite "intermédiaire", autre qu'en acier au carbone, recouvrant ledit substrat en acier au carbone et dont la fonction est de supporter les oxydes ou hydroxydes d'aluminium. Cette couche intermédiaire est elle-même recouverte d'un film d'organosilane au contact du caoutchouc ; l'organosilane, au moins bifonctionnel, assure en tant qu'agent de couplage la liaison entre la couche métallique intermédiaire et la matrice de caoutchouc.

### A) Couche métallique intermédiaire

La couche métallique intermédiaire a pour caractéristique essentielle de supporter les oxydes ou hydroxydes d'aluminium destinés à être liés à la matrice de caoutchouc par l'intermédiaire de l'agent de couplage organosilane.

Par oxyde et/ou hydroxyde d'aluminium, il faut entendre ici, de manière connue, un composé répondant, aux impuretés et à l'eau d'hydratation près, à la formule générale qui suit (a et b nombres entiers ou fractionnaires):

Al(OH)ₐ O_{b}, avec: 0 ≤ a ≤ 3 et b = (3-a) / 2 .

Une telle formule regroupe les cas des alumines Al₂O₃ (a=0), des tri-hydroxydes d'aluminium Al(OH)₃ (a=3), des oxyde-hydroxydes d'aluminium (0<a<3) et de tout mélange de tels oxydes ou hydroxydes.

De préférence, dans le composite selon l'invention, le métal de la couche intermédiaire servant de support aux oxydes ou hydroxydes ci-dessus est de l'aluminium ou un alliage d'aluminium, choisi par exemple parmi les alliages binaires ou ternaires d'aluminium connus de l'homme du métier tels que des alliages binaires Al-Mg, Al-Cu, Al-Ni, Al-Zn ou des alliages ternaires d'Al et de deux de ces autres éléments. En effet, l'aluminium et ses alliages comportent naturellement, au moins en surface, un nombre important de ces oxydes/hydroxydes. De préférence, l'alliage d'aluminium est un alliage binaire Al-Zn.

Mais tout autre support métallique susceptible d'adhérer au substrat en acier au carbone conviendrait, dans la mesure où il comporte, au moins en surface, des oxydes ou hydroxydes d'aluminium au contact du film d'organosilane.

La couche métallique intermédiaire est déposée sur le renfort ou sur les éléments individuels constitutifs de ce renfort, notamment lorsqu'il s'agit d'un assemblage, par tout procédé connu de l'homme du métier susceptible d'appliquer, en continu ou en discontinu, un revêtement d'aluminium ou d'alliage d'aluminium, sur un substrat en acier au carbone. On utilisera par exemple une technique simple de trempage au défilé, dans un bain contenant l'aluminium ou l'alliage d'aluminium à l'état liquide, une technique de dépôt par voie électrolytique, ou encore par un procédé de pulvérisation.

Dans le cas le plus fréquent où le renfort utilisé est un câble constitué de fils fins en acier au carbone, la couche métallique intermédiaire sera de préférence déposée sur les fils, et non sur le câble final. Dans un tel cas, notamment pour faciliter les opérations de tréfilage, le dépôt sera réalisé avantageusement sur un fil de diamètre dit "intermédiaire", par exemple de l'ordre du millimètre, en sortie du dernier traitement thermique (patentage) précédant l'étape de tréfilage final humide pour l'obtention du fil fin ayant le diamètre final visé.

### B) Film d'organosilane

Le film d'organosilane a pour fonction d'assurer, en tant qu'agent de couplage (métal/caoutchouc), la liaison entre les oxydes/hydroxydes d'aluminium d'une part et la matrice de caoutchouc d'autre part. Il doit donc posséder d'une part au moins une fonction réactive vis-à-vis des oxydes ou hydroxydes d'aluminium, d'autre part au moins une fonction réactive vis-à-vis de l'élastomère diénique lui-même (ou d'au moins l'un de ces élastomères si plusieurs sont utilisés) et/ou d'un autre constituant présent dans la composition de caoutchouc, par exemple d'une résine renforçante.

On rappelle ici que, par agent de "couplage" (métal/caoutchouc), on doit entendre de manière connue un agent apte à établir une connexion suffisante, de nature chimique et/ou physique, entre le métal et le caoutchouc. Un tel agent de couplage, par conséquent au moins bifonctionnel, a par exemple comme formule générale simplifiée " Y-T-X ", dans laquelle:
- Y représente un groupe fonctionnel (fonction "Y") qui est capable de se lier physiquement et/ou chimiquement au métal, une telle liaison pouvant être établie, par exemple, entre un atome de silicium de l'agent de couplage et les oxydes ou hydroxydes de surface du métal considéré (ici, l'aluminium);
- X représente un groupe fonctionnel (fonction "X") capable de se lier physiquement et/ou chimiquement à la composition de caoutchouc, par exemple à l'élastomère diénique par l'intermédiaire d'un atome de soufre, ou encore à une résine présente dans cette composition par l'intermédiaire d'une fonction aminée;
- T représente un groupe organique permettant de relier Y et X.

Les organosilanes polyfonctionnels destinés à assurer l'adhésion entre des renforts, textiles ou métalliques, et des polymères tel que du caoutchouc sont bien connus de l'homme du métier et ont été décrits dans de nombreux documents (voir par exemple, dans le domaine du pneumatique, US-A-4 052 524, US-A-4 441 946, EP-A-0 738 748, EP-A-0 802 217, WO00/23504 et WO00/23505).

Sans que la définition ci-après soit limitative, l'organosilane utilisé a pour formule préférentielle: 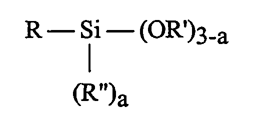 dans laquelle:
- R représente un radical organique porteur d'au moins une fonction (fonction X supra) susceptible de réagir avec au moins un constituant de la matrice de caoutchouc;
- chaque OR' (fonction Y supra) représente un groupe fonctionnel susceptible de réagir avec un oxyde ou hydroxyde d'aluminium;
- chaque R" représente, de façon indépendante, l'hydrogène, un halogène, un radical organique cyclique, acyclique ou aromatique;
- a=0, 1 ou 2.

La formule générale ci-dessus englobe en particulier les cas où le radical R contient non seulement la fonction X précitée mais encore au moins une seconde fonction Y (identique ou non à la première), comme c'est par exemple le cas pour des bis-alkoxysilanes symétriques du type polysulfures.

Le radical R est de préférence porteur d'un hydroxyalkyle, un aminoalkyle, un polyaminoalkyle, un époxyalkyle, notamment un glycidylalkyle, un halogénoalkyle, un mercaptoalkyle, un alkylsulfure ou un alkylpolysulfure pouvant contenir un atome de silicium, un azidoalkyle, un radical cyclique ou acyclique comportant au moins une double liaison éthylénique, de préférence une double liaison éthylénique activée.

On rappelle que de manière connue, une liaison "activée" est une liaison rendue plus apte à réagir, en l'occurrence, ici, avec l'élastomère diénique. La double liaison éthylénique (>C=C<) du radical R est de préférence activée par la présence d'un groupe électro-attracteur adjacent, c'est-à-dire fixé sur un des deux atomes de carbone de la double liaison éthylénique, ce groupe électro-attracteur ou "activant" étant notamment choisi parmi ceux porteurs d'au moins une des liaisons C=O, C=C, C=C, OH, O-Alkyle ou O-Aryle, ou d'au moins un atome de soufre et/ou d'azote, ou d'au moins un halogène. Par définition, un groupe "électro-attracteur" est un radical ou groupe fonctionnel susceptible d'attirer les électrons à lui-même plus que ne le ferait un atome d'hydrogène s'il occupait la même place dans la molécule considérée.

Les radicaux R', identiques ou différents s'ils sont plusieurs (a = 0 ou 1), sont notamment choisis parmi l'hydrogène ou un radical organique ou organométallique, cyclique ou acyclique ; lorsque R' est un radical organométallique, il comporte de préférence au moins un atome de silicium. Chaque R' est de préférence, de façon indépendante, l'hydrogène, un alkyle ayant de 1 à 6 atomes de carbone, un radical organométallique comportant de 1 à 6 atomes de carbone et au moins un atome de silicium.

Les radicaux R", identiques ou différents s'ils sont plusieurs (a = 2), sont de préférence choisis parmi les alkyles ayant de 1 à 6 atomes de carbone, par exemple les radicaux méthyle et/ou éthyle.

L'organosilane de départ est choisi de préférence dans le groupe constitué par les amino-alkyl(C₁-C₆)-alkoxy(C₁-C₆)silanes, les acryloxy-alkyl(C₁-C₆)-alkoxy(C₁-C₆)silanes, les méthacryloxy-alkyl(C₁-C₆)-alkoxy(C₁-C₆)silanes, les glycidoxy-alkyl(C₁-C₆)-alkoxy(C₁-C₆)silanes, les mercapto-alkyl(C₁-C₆)-alkoxy(C₁-C₆)silanes, les di- ou poly-sulfures d'alkyl(C₁-C₂₀)-alkoxy(C₁-C₆)silanes, les maléimido-alkyl( C₁-C₆)alkoxy(C₁-C₆)silanes, les isomaléimido-alkyl(C₁-C₆)-alkoxy(C₁-C₆)silanes, les acides N-[alkyl(C₁-C₆)alkoxy(C₁-C₆)silyl] maléamiques, ou un mélange de ces composés.

Comme exemples particuliers de tels silanes utilisables dans l'interphase adhésive des composites selon l'invention, peuvent être cités le 3-aminopropyl-triéthoxysilane, le 3-métacryloxypropyl-triméthoxysilane, le 3-glycidoxypropyl-triméthoxysilane, le 3-mercaptopropyl-triméthoxysilane, le N-béta-aminoéthyl-3-aminopropyl-triméthoxysilane, le 3-aminopropyl-triméthoxysilane, le 3-aminoéthyl-triéthoxysilane, le 3-métacryloxypropyl-triéthoxysilane, le 3-glycidoxyéthyl-triéthoxysilane, le 3-mercaptopropyl- triéthoxysilane, le N-béta-aminoéthyl-3-aminoéthyl-triméthoxysilane, le 3-aminobutyl- triéthoxysilane, le 3-aminoéthyl-triméthoxysilane, le 3-aminopropyl-méthyl-diéthoxysilane, le tétrasulfure de bis-triéthoxysilylpropyle, le tétrasulfure de bis-triméthoxysilylpropyle, le 3-maléimidopropyltriéthoxysilane, l'acide (N-propyltriéthoxysilyl) maléamique.

Comme autres exemples particuliers d'organosilanes, on peut citer également le p-(triméthoxysilyl) benzyldiazoacétate, le 4-(triméthoxysilyl)cyclohexylsulfonyl azidure, le 6-(triméthoxysilyl)hexylsulfonyl azidure.

Le silane est choisi plus préférentiellement dans le groupe constitué par le 3-aminopropyl-triéthoxysilane, le N-béta-aminoéthyl-3-aminopropyl-triméthoxysilane, le 3-glycidoxypropyl-triméthoxysilane, le 3-mercaptopropyl-triméthoxysilane, le 3-aminopropyl-méthyl-diéthoxysilane, le 3-maléimidopropyltriéthoxysilane, le tétrasulfure de bis-triéthoxysilylpropyle, et les mélanges de ces organosilanes.

Avantageusement, on utilise un amino-alkyl(C₁-C₆)alkoxy(C₁-C₆)silane, en particulier le 3-amino-propyl-triéthoxysilane, ou un maléimido-alkyl(C₁-C₆)-alkoxy(C₁-C₆)silane, en particulier le 3-maléimidopropyltriéthoxysilane.

Bien entendu, on peut utiliser un seul organosilane ou un mélange d'organosilanes.

L'organosilane est de préférence déposé directement sur le renfort en acier au carbone revêtu de sa couche intermédiaire d'oxydes ou hydroxydes d'aluminium. Ce dépôt peut être réalisé par tout procédé connu, en discontinu ou en continu, par exemple par une application avec un pinceau, par trempage, par pulvérisation, l'organosilane étant utilisé pur, dilué dans un solvant ou en suspension dans l'eau.

Si le silane sélectionné est utilisé en solution, par exemple dans un mélange d'eau et d'alcool, la concentration du silane dans la solution est de préférence comprise entre 0,05% et 15%, plus préférentiellement comprise entre 0,1 % et 10% (% en poids).

Avant contact avec l'organosilane, la surface du renfort, revêtu de sa couche métallique intermédiaire, peut être préalablement nettoyée et/ou activée de diverses manières connues dans la technique, par exemple par un lavage à l'eau chaude, par traitement avec une solution aqueuse acide ou basique, avec étapes éventuelles de rinçage et séchage intermédiaires, ou encore par un traitement par plasma.

A titre indicatif, la couche d'organosilane ainsi déposée représente de préférence moins de 50 mg, plus préférentiellement moins de 5 mg de silane pour 100 g de renfort, ce qui équivaut à une épaisseur généralement comprise entre 10 et 100 nm (nanomètres), selon le type de procédé utilisé pour le dépôt.

Après l'application du silane, la surface du renfort peut être séchée, par exemple à l'air ambiant, ou de préférence traitée thermiquement, par chauffage dans un four ou dans un tunnel, le chauffage étant par exemple obtenu par conduction au contact de gaz chaud, ou par voie électrique, notamment par effet Joule ou par induction.

Ce traitement thermique permet le départ du ou des solvants éventuels, ainsi que la réaction, partielle ou totale selon l'intensité du traitement, de l'organosilane avec les oxydes ou hydroxydes d'aluminium, c'est-à-dire la formation d'un réseau superficiel tridimensionnel de ≡Si-OR' ou ≡Si-OH condensés avec les oxydes-hydroxydes d'aluminium, ce réseau superficiel étant destiné à adhérer ultérieurement à la matrice de caoutchouc.

### II-4. Composite de l'invention

Le renfort métallique ainsi préparé peut être mis directement au contact de la composition de caoutchouc, en vue de fabriquer le composite de l'invention.

Ce composite peut se présenter sous des formes variées, par exemple sous la forme d'une nappe, d'une bande, bandelette ou d'un bloc de caoutchouc dans lequel est incorporé le renfort métallique à l'aide de différents moyens connus de l'homme du métier, tels que par exemple des moyens de moulage, de calandrage ou de boudinage.

Bien entendu, l'invention concerne les composites à l'état cru (i.e., avant cuisson ou réticulation) comme à l'état cuit (i.e., après réticulation). Dans ce composite, l'adhésion définitive entre le métal et la composition de caoutchouc, via l'interphase adhésive, est obtenue à l'issue de la cuisson (vulcanisation) de l'article fini, par exemple le pneumatique, comportant le composite. De préférence, cette cuisson est opérée sous pression.

Les composites selon l'invention sont préférentiellement destinés à des pneumatiques, en particulier à des pneumatiques radiaux pour former tout ou partie de l'armature de sommet, de l'armature de carcasse ou l'armature de la zone bourrelet de tels pneumatiques.

A titre d'exemple, la figure annexée représente de manière schématique une coupe radiale d'un pneumatique Poids-lourd 1 à armature de carcasse radiale pouvant être conforme ou non à l'invention, dans cette représentation générale. Ce pneumatique 1 comporte un sommet 2, deux flancs 3, deux bourrelets 4, une armature de carcasse 7 s'étendant d'un bourrelet à l'autre. Le sommet 2, surmonté d'une bande de roulement (non représentée sur cette figure schématique, pour simplification) est de manière connue en soi renforcé par une armature de sommet 6 constituée par exemple d'au moins deux nappes sommet croisées superposées, recouvertes éventuellement d'au moins une nappe sommet de protection, toutes ces nappes pouvant être renforcées par des câbles métalliques. L'armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est constituée d'au moins une nappe renforcée par des câbles métalliques dits "radiaux", c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Le pneumatique conforme à l'invention a pour caractéristique essentielle de comporter dans sa structure au moins un composite (métal/caoutchouc) conforme à l'invention, ce composite pouvant être, par exemple, une partie de la zone bourrelet 4 comportant la tringle 5, une nappe sommet croisée ou une nappe de protection de l'armature de sommet 6, une nappe formant tout ou partie de l'armature de carcasse 7.

Comme indiqué précédemment, le composite de l'invention est avantageusement utilisable pour constituer une nappe d'armature carcasse 7 d'un pneumatique pour véhicule industriel tel que Poids lourd. De préférence, dans un tel cas, sa composition de caoutchouc présente, à l'état vulcanisé (i.e., après cuisson), un module sécant en extension E10 qui est inférieur à 9 MPa, plus préférentiellement compris entre 4 et 9 MPa.

Mais le composite de l'invention peut avoir une utilisation tout aussi avantageuse dans les armatures de sommet de tous types de pneumatiques, par exemple pour véhicules tourisme, camionnettes ou Poids-lourd. De préférence, dans un tel cas, sa composition de caoutchouc présente à l'état vulcanisé un module E10 qui est supérieur à 9 MPa, plus préférentiellement compris entre 9 et 20 MPa.

C'est dans les domaines de modules E10 indiqués ci-dessus que l'on a enregistré le meilleur compromis d'endurance sur les composites de l'invention d'une part, les pneumatiques renforcés de ces composites d'autre part.

### III. EXEMPLES DE REALISATION DE L'INVENTION

Sauf indication différente, dans les essais qui suivent, toutes les données concernant les formulations des compositions de caoutchouc ou de métal sont des parties en poids.

### III-1. Nature et propriétés des renforts utilisés

Pour la réalisation des exemples de composites conformes ou non à l'invention, on utilise comme renforts métalliques soit des câbles constitués de fils fins en acier au carbone, revêtus ou non, la structure ou géométrie de ces câbles étant notamment utilisable pour le renforcement des armatures de carcasse de pneumatiques Poids-lourd ou des armatures de sommet de pneumatiques tourisme, soit des fils élémentaires de gros diamètre utilisables pour le renforcement des zones basses de pneumatiques, notamment sous forme de tringles.

Les fils fins en acier au carbone sont préparés en partant par exemple de fils machine (diamètre 5 à 6 mm) que l'on écrouit tout d'abord, par laminage et/ou tréfilage, jusqu'à un diamètre intermédiaire voisin de 1 mm, ou encore en partant directement de fils commerciaux intermédiaires dont le diamètre est voisin de 1 mm. L'acier utilisé est un acier au carbone connu, par exemple du type USA AISI 1069 dont la teneur en carbone est de 0,7% environ, comportant 0,5% de manganèse et 0,2% de silicium environ, le reste étant constitué de fer et des impuretés inévitables habituelles liées au procédé de fabrication de l'acier. Les fils de diamètre intermédiaire subissent alors un traitement de dégraissage et/ou décapage, avant leur transformation ultérieure. Après dépôt éventuel d'un revêtement métallique sur ces fils intermédiaires (par exemple, laiton, zinc ou alliage d'aluminium, selon les exemples qui suivent), on effectue alors sur chaque fil un écrouissage dit "final" (i.e., mis en oeuvre après le dernier traitement thermique de patentage), par tréfilage à froid en milieu humide avec un lubrifiant de tréfilage qui se présente par exemple sous forme d'une émulsion aqueuse.

Les fils élémentaires de plus gros diamètre (fils tringle) sont préparés directement à partir de ces fils de diamètre intermédiaire, traités (dégraissage et/ou décapage), sans qu'une opération d'écrouissage soit nécessaire.

Les câbles utilisés sont des câbles à couches de structure connue [3+9] ou [1+6], formés au total, respectivement, de 12 ou 7 fils de diamètre égal à environ 0,225 mm.

Les câbles de structure [3+9], non frettée, comportent une âme de 3 fils enroulés ensemble en hélice (direction S) selon un pas de 6,3 mm, cette âme étant entourée et au contact d'une couche de 9 fils eux-mêmes enroulés ensemble en hélice (direction S) autour de l'âme, selon un pas de 12,5 mm.

Les câbles de structure [1+6], non frettée, comportent une âme formée d'un seul fil entourée et au contact d'une couche de 6 fils enroulés ensemble en hélice (direction S) autour de l'âme, selon un pas de 12,5 mm.

Plus précisément, les câbles ou fils utilisés ont les caractéristiques qui suivent :
- renforts notés "R-1" : ce sont des câbles témoins [3+9] constitués de fils conventionnels laitonnés (dépôt électrolytique) ; le laiton utilisé contient 68% de cuivre, il peut être utilisé pour coller à des compositions de caoutchouc dépourvues de composés de cobalt; le revêtement de laiton a une épaisseur très faible, nettement inférieure au micromètre, ce qui équivaut à environ 350 à 400 mg de laiton pour 100 g de fil;
- renforts "R-2" : ce sont d'autres câbles témoins [3+9] constitués de fils dont la couche de laiton a été remplacée par une couche d'alliage aluminium-zinc (environ 5% en poids d'aluminium) ; l'épaisseur du revêtement d'alliage, déposé "au trempé" avant tréfilage humide final, est de l'ordre du micromètre après tréfilage (soit environ 1,6 g d'alliage d'aluminium pour 100 g de fil) ; de tels fils et câbles sont connus, décrits par exemple dans la demande WO91/01389 précitée;
- renforts "R-3": autres câbles témoins [3+9] constitués de fils d'acier dit "clair" (i.e., sans revêtement métallique), ces câbles étant revêtus d'un seul film d'organosilane ultra-mince (estimé à moins de 5 mg de silane pour 100g de fil);
- renforts "R-4": ce sont des câbles [3+9] destinés aux composites conformes à l'invention ; chaque fil en acier au carbone est revêtu d'une couche intermédiaire d'alliage aluminium-zinc, identique à celle des fils des câbles R-2, ces câbles étant eux-mêmes revêtus d'un film d'organosilane identique à celui des câbles R-3;
- renforts "R-5": autres câbles témoins [3+9] constitués de fils conventionnels laitonnés (dépôt électrolytique) ; le laiton utilisé contient 68% de cuivre comme pour les câbles R-1 ; le revêtement de laiton a une épaisseur très faible qui équivaut à environ 250 mg de laiton pour 100 g de fil;
- renforts "R-6": câbles témoins [3+9] identiques aux câbles R-5, exception faite d'un film d'organosilane (identique à celui des câbles R-3 et R-4) supplémentaire déposé à la surface du laiton;
- renforts "R-7": câbles témoins [3+9] constitués de fils d'acier clair, les câbles étant revêtus d'un seul film d'organosilane (comme pour les câbles R-3);
- renforts "R-8": câbles [3x9] destinés aux composites conformes à l'invention ; chaque fil en acier au carbone est revêtu d'une couche intermédiaire d'alliage aluminium-zinc (environ 10% en poids d'aluminium); l'épaisseur du revêtement d'alliage, déposé "au trempé" avant tréfilage humide final, est de l'ordre de deux micromètres après tréfilage (soit environ 3 g d'alliage d'aluminium pour 100 g de fil); ces câbles sont revêtus en outre d'un film d'organosilane (identique à celui des câbles R-4 ou R-6);
- renforts "R-9": ce sont des fils élémentaires (fils pour tringle) de gros diamètre (environ 0,95 mm) ; le laiton utilisé contient 64% de cuivre; le revêtement de laiton a une épaisseur très faible, de l'ordre de 10 micromètres environ, ce qui équivaut à environ 5 g de laiton pour 100 g de fil;
- renforts "R-10": fils tringle comme décrit ci-dessus; la couche de laiton a été remplacée par une couche de zinc d'épaisseur de 15 µm environ, ce qui équivaut à environ 6 g de zinc pour 100 g de fil ; ces fils R-10 sont en outre revêtus d'un film d'organosilane;
- renforts "R-11": fils tringle destinés aux composites conformes à l'invention ; la couche de laiton a été remplacée par une couche d'alliage aluminium-zinc (10% Al), elle-même revêtue d'un film d'organosilane; la couche d'alliage a une épaisseur d'environ 20 µm, ce qui équivaut à environ 7 g d'alliage pour 100 g de fil;
- renforts "R-12": câbles témoins [3+9] constitués de fils conventionnels laitonnés (dépôt électrolytique - laiton contenant 64% de cuivre);
- renforts "R-13": câbles témoins [3+9] comme les câbles R-12 ci-dessus, la couche de laiton ayant été remplacée par une couche de zinc d'épaisseur de 1,5 µm environ, ce qui équivaut à environ 2,4 g de zinc pour 100 g de fil; ces câbles sont en outre revêtus d'un film d'organosilane identique à celui des câbles R-3 ou R-4;
- renforts "R-14": câbles à couches témoins [1+6] non frettés, constitués de 7 fils de diamètre 0,225 mm environ, un fil servant d'âme (ou coeur) et les six autres enroulés ensemble en hélice autour de l'âme selon un pas de 12,5 mm ; les fils sont des fils en acier au carbone conventionnels laitonnés, préparés comme indiqué précédemment pour les renforts R-1;
- renforts "R-15": ces câbles [1+6], destinés aux composites conformes à l'invention, sont identiques aux câbles R-14 à la différence près que le laiton est remplacé par une couche d'alliage Al-Zn elle-même revêtue d'un film d'organosilane (comme indiqué pour les renforts R-4).

Seuls les renforts R-4, R-8, R-11 et R15 sont donc conformes à l'invention.

Pour la silanisation des renforts silanisés (R-3, R-4, R-6, R-7, R-8, R-10, R-11, R-13, R-15), on a utilisé le 3-aminopropyl-triéthoxysilane (cas général) ou le 3-maléimidopropyltriéthoxysilane (cas des renforts R-7 et R-8), en procédant de la manière suivante : le renfort est tout d'abord traité par passage dans un bain d'eau chaude à 50°C (temps de séjour : environ 10 secondes) ; puis, le renfort est envoyé dans le bain de silane à 20°C contenant (% en vol.): 1% de silane, 10% d'eau et 89% d'éthanol (temps de séjour : environ 30 secondes) ; après application du silane, la surface du renfort est séchée par passage dans un tunnel chauffant à une température de 175°C pendant 90 secondes.

Les différents renforts ont, avant incorporation aux matrices de caoutchouc auxquelles ils sont destinés, les propriétés mécaniques indiquées dans le tableau 1 annexé.

De manière connue, l'allongement At est l'allongement total enregistré à la rupture du renfort, c'est-à-dire intégrant à la fois la partie élastique de l'allongement (loi de Hooke) et la partie plastique de l'allongement auxquelles s'ajoutent, dans le cas d'un câble, la partie dite structurale de l'allongement inhérente à la géométrie spécifique du câble testé.

### III-2. Tests d'adhésion

On utilise dans les tests d'adhésion trois compositions ou matrices de caoutchouc, notées M-1 à M-3, à base de caoutchouc naturel et de noir de carbone. Le tableau 2 annexé donne leur formulation précise en pce (parties en poids pour cents parties d'élastomère). Outre les ingrédients habituels (huile d'extension, antioxydant, oxyde de zinc, acide stéarique, soufre et accélérateur de vulcanisation), la matrice M-1 contient du résorcinol et un durcisseur (HMT) ; la matrice M-2 contient une bismaléimide ; la matrice M-3 ne contient ni résorcinol ni bismaléimide. Est utilisée en outre, dans les trois cas, une faible quantité de silice (5 pce). Ces trois compositions de caoutchouc sont dépourvues de promoteur d'adhésion du type sel de cobalt.

A partir de ces 3 matrices de caoutchouc et des renforts R-1 à R-13 précédemment décrits, on prépare au total 30 composites (acier au carbone/caoutchouc), notés C-1 à C-30, conformément aux indications du tableau 3 annexé. Ces composites C-1 à C-30 ont la forme des blocs de caoutchouc destinés aux tests d'adhésion décrits au paragraphe I-3 précédent.

### A) Essai 1

Le but de ce premier essai est de comparer les performances adhésives des composites C-1 et C-2 soumis aux conditions de "vieillissement humide" ou de "vieillissement humide et corrosif' telles que décrites au paragraphe 1-2. Le composite C-1 est le témoin pourvu de l'interphase adhésive conventionnelle (laiton) ; le composite C-2 est celui conforme à l'invention. La matrice de caoutchouc est la matrice M-1 précédemment décrite comportant notamment résorcinol, HMT et silice.

On soumet tout d'abord différents échantillons de ces deux composites à une étude cinétique de vieillissement, sous conditions de "vieillissement humide" (voir paragraphe 1-2), pendant 17 semaines, en mesurant la force d'arrachement "Fa" initiale (composites non vieillis), après 5 semaines de vieillissement, puis toutes les 3 semaines jusqu'à un vieillissement maximal de 17 semaines.

Les résultats obtenus sont résumés dans le tableau 4 annexé, en unités relatives (u.r.), la base 100 étant retenue pour la force d'arrachement initiale enregistrée sur le composite témoin (laiton).

Le niveau d'adhésion de départ est très élevé, avec une force d'arrachement moyenne initiale de l'ordre de 90 daN (base 100) dans les deux cas. Après 5 semaines de vieillissement, la force d'arrachement du composite témoin est diminuée de 10% environ, puis, au-delà, chute rapidement pour atteindre un niveau résiduel final qui ne représente plus qu'un tiers environ de la performance initiale. Par contre, pour le composite conforme à l'invention, on constate que la force d'arrachement Fa ne subit, de manière inattendue, aucune altération (à la précision de mesure près) même après un vieillissement prolongé de 17 semaines.

On soumet d'autre part d'autres échantillons de ces deux composites C-1 et C-2 aux conditions de "vieillissement humide et corrosif' exposées au paragraphe 1-2, c'est-à-dire qu'après 3 semaines de vieillissement humide, on fait subir aux composites un vieillissement supplémentaire de 4 jours sous conditions fortement corrosives. On constate alors que le niveau d'adhésion chute très fortement sur le composite témoin, pratiquement d'un facteur 10 (Fa résiduelle égale à 9.6, en u.r.), alors que l'adhésion n'est pas affectée sur le composite conforme à l'invention (Fa résiduelle égale à 99, en u.r.).

Cet essai démontre donc une excellente performance adhésive du composite conforme à l'invention après vieillissement humide ou corrosif, nettement supérieure à celle du composite témoin.

### B) Essai 2

Le but de cet essai est de comparer les composites C-3 à C-5, tant à l'état initial qu'après un "vieillissement humide et corrosif' (paragraphe 1-2). Le composite C-3 est le témoin pourvu de l'interphase adhésive conventionnelle (laiton) ; le composite C-4 est le témoin comportant le film de silane seul à titre d'interphase adhésive ; le composite C-5 est celui conforme à l'invention. La matrice de caoutchouc (M-1) est identique à celle de l'essai précédent.

On obtient les résultats du tableau 5 annexé, dans lesquels la base 100 a été retenue pour le niveau adhésif initial (avant vieillissement) enregistré sur le composite témoin (laiton).

Ces résultats confirment ceux de l'essai 1 précédent. Tout d'abord, on note que les niveaux d'adhésion initiaux sont identiques pour les composites C-3 et C-5, légèrement supérieurs à ceux du composite C-4. Mais on constate surtout que le composite conventionnel (laiton) C-3 résiste mal aux conditions du test de vieillissement (chute de 90% de Fa), le composite conforme à l'invention C-5 apparaissant quant à lui insensible au vieillissement. Quant au composite C-4 utilisant le film d'organosilane seul comme interphase adhésive, il montre une performance intermédiaire, toutefois très inférieure à celle du composite selon l'invention.

### C) Essai 3

On compare ici les composites C-6 à C-8. Le composite C-6 est le témoin pourvu de l'interphase adhésive conventionnelle (laiton) ; le composite C-7 est le témoin comportant le film de silane seul à titre d'interphase adhésive ; le composite C-8 est celui conforme à l'invention. La matrice de caoutchouc est la matrice M-2 comportant notamment une bismaléimide.

On soumet tout d'abord les composites au test de "vieillissement humide et corrosif' conduit conformément au paragraphe 1-2. On obtient alors les résultats du tableau 6 annexé, la base 100 étant retenue pour le niveau d'adhésion initial enregistré sur le composite témoin (laiton).

Ces résultats confirment tout à fait ceux des essais 1 et 2 précédents. On note tout d'abord que les niveaux d'adhésion initiaux sont identiques entre le composite C-6 (laiton) et le composite conforme à l'invention C-8, supérieurs à ceux du composite C-7. Le composite conventionnel (laiton) résiste mal au test de vieillissement (chute de 84% de l'adhésion) tandis que le composite de l'invention C-8 apparaît comparativement peu sensible au vieillissement, avec une chute très faible de l'adhésion (12% seulement). Quant au composite C-7 (silane seul), bien que supérieur au témoin C-6, il révèle une performance nettement inférieure à celle du composite de l'invention.

On confirme ainsi, avec une matrice de caoutchouc différente, la supériorité du composite de l'invention par rapport aux composites témoins.

On soumet d'autre part d'autres échantillons de ces trois composites C-6 à C-8 aux conditions de "vieillissement corrosif' décrites au paragraphe I-2, pendant une durée totale de 14 jours.

On observe cette fois les résultats du tableau 7 annexé (base 100 retenue pour le composite témoin C-6 (laiton), avant vieillissement).

Dans ces conditions de vieillissement fortement corrosif, on constate encore une fois une nette supériorité du composite conforme à l'invention : le niveau d'adhésion chute des 2/3 environ pour les deux composites témoins, alors qu'il ne diminue que de 50% environ pour le composite de l'invention.

### D) Essai 4

On compare ici les composites C-9 à C-12, en termes d'adhésion initiale, c'est-à-dire avant tout vieillissement. Ces composites C-9 et C-11 sont deux témoins, non conformes à l'invention, dont l'interphase adhésive est certes constituée d'une couche d'alliage aluminium-zinc mais est dépourvue du film d'organosilane, contrairement aux composites C-10 et C-12 conformes à l'invention. Les matrices de caoutchouc testées sont les matrices M-1 (à base de résorcinol et durcisseur HMT) et M-2 (à base de bismaléimide).

L'adhésion initiale mesurée est indiquée dans la tableau 8: une base 100 a été retenue pour le composite conforme à l'invention C-10 ayant montré l'adhésion initiale la plus élevée (Fa égale à environ 90 daN), identique par ailleurs à celle du composite témoin de référence C-1 (laiton) testé au cours de l'essai 1.

On note que les composites témoins C-9 et C-11 montrent une adhésion nettement insuffisante quelle que soit la matrice de caoutchouc, en particulier pour la matrice M-2.

Les deux composites selon l'invention C-10 et C-12 montrent par contre un niveau d'adhésion très élevé, par ailleurs quasiment identique.

Cet essai démontre ainsi clairement que la seule présence d'oxydes-hydroxydes d'aluminium à la surface de l'acier au carbone est très nettement insuffisante, en l'absence du film d'organosilane, pour l'obtention des niveaux d'adhésion initiale habituellement escomptés.

### E) Essai 5

Le but de cet essai est de comparer 6 nouveaux composites C-13 à C-18 (voir détails au tableau 3), comportant des renforts (R-5, R-6 et R-8) différents de ceux précédemment testés, tant à l'état initial qu'après un "vieillissement humide et corrosif'.

Les composites C-13 et C-16 sont les deux témoins de référence, pourvus de l'interphase adhésive conventionnelle (laiton). Les composites témoins C-14 et C-17 comportent en plus un film de silane à la surface du laiton. Les composites C-15 et C-18 sont les seuls conformes à l'invention. Les matrices de caoutchouc testées sont les matrices M-1 et M-2.

Le tableau 9 donne les niveaux d'adhésion initiale et après vieillissement. La base 100 a été retenue pour le niveau d'adhésion initial enregistré sur chacun des composites testés (Fa égale à environ 90 daN pour chacun d'entre eux).

Concernant l'adhésion après vieillissement, ces résultats confirment clairement ceux de l'essai 1 précédent, à savoir que les composites conventionnels (laiton) C-13 et C-16 résistent mal au vieillissement (chute de plus de 85% pour Fa), tandis que les composites de l'invention C-15 et C-18 apparaissant quant à eux peu sensibles au vieillissement, avec une chute de Fa qui reste inférieure à 30%.

Quant aux composites témoins C-14 et C-17 utilisant le film d'organosilane à la surface du laiton, ils montrent une performance au mieux intermédiaire (pour C-14) ou très faible (pour C-17), en tout cas très nettement inférieure à celle des composites selon l'invention.

Cet essai démontre donc clairement qu'en termes d'adhésion après vieillissement, la présence d'un film de silane à la surface du laiton conduit à une performance nettement inférieure à celle offerte par les composites conformes à l'invention dans lesquels la couche de laiton a été remplacée par la couche d'alliage Al-Zn porteuse d'oxydes-hydroxydes d'aluminium.

### F) Essai 6

On compare ici les performances adhésives de 3 nouveaux composites, notés C-19 à C-21, comportant les fils tringles R-9 à R-11, ces composites étant destinés à renforcer la zone bourrelet d'un pneumatique tourisme. Ces 3 composites sont soumis au test de "vieillissement humide et corrosif'.

C-19 est le témoin de référence puisque pourvu de l'interphase adhésive conventionnelle (laiton). C-21 est le composite conforme à l'invention. Quant à C20, il s'agit d'un autre composite témoin dont l'interphase adhésive consiste cette fois en une couche de zinc qui est elle-même revêtue du film d'organosilane. En d'autres termes, le composite selon l'invention se distingue du témoin C-20 par la seule nature de la couche intermédiaire utilisée: Zn pour le témoin, alliage Al-Zn pour l'invention. La matrice de caoutchouc est la matrice M-3.

Les résultats obtenus sont résumés dans le tableau 10, la base 100 étant retenue pour la force d'arrachement initiale enregistrée sur le composite témoin (laiton). Le niveau d'adhésion de départ est élevé, avec une force d'arrachement moyenne initiale de l'ordre de 55 daN, le niveau le plus élevé étant par ailleurs enregistré sur le composite de l'invention.

Après vieillissement, on note que l'adhésion chute de 80% sur les deux témoins, alors qu'elle reste supérieure à 50% de sa valeur initiale sur le composite de l'invention.

Cet essai démontre ainsi clairement que la présence, dans l'interphase adhésive, d'oxydes-hydroxydes d'aluminium et non pas d'oxydes-hydroxydes d'un quelconque autre métal, tel que notamment des oxydes-hydroxydes de zinc, est une caractéristique essentielle pour l'invention.

### G) Essai 7

On prépare ici 6 nouveaux composites, notés C-22 à C-27 (voir détails au tableau 3), comportant les renforts R-5, R-7 et R-8, certains de ces composites étant similaires à ceux préparés et testés dans l'essai 5.

Les composites C-22 et C-25 sont les deux témoins de référence, pourvus de l'interphase adhésive conventionnelle (laiton). Dans les deux autres témoins C-23 et C-26, le laiton a été remplacé par un film d'organosilane, alors que dans les composites C-24 et C-27 selon l'invention, le laiton a été remplacé par une couche intermédiaire d'alliage Al-Zn (10% Al) elle-même revêtue du film d'organosilane. En d'autres termes, les composites selon l'invention se distinguent des témoins C-23 et C-26 par la seule présence additionnelle de la couche intermédiaire d'alliage Al-Zn entre le substrat en acier au carbone et le film d'organosilane. Les matrices de caoutchouc testées sont M-1 et M-2.

Le tableau 11 donne les niveaux d'adhésion initiale et après vieillissement humide et corrosif, pour chacun des composites testés. La base 100 a été retenue pour le niveau d'adhésion initial enregistré sur chacun des composites (Fa égale à environ 90 daN pour chacun d'entre eux).

Quelle que soit la matrice de caoutchouc utilisée, la supériorité de l'invention est une nouvelle fois établie: la chute d'adhésion après vieillissement reste inférieure à 30% dans tous les cas, alors que cette chute peut atteindre près de 80 à 90% pour les composites témoins.

Il est ainsi démontré clairement qu'en termes d'adhésion après vieillissement, la présence d'un seul film de silane à la surface de l'acier au carbone conduit à une performance nettement insuffisante, comparée à celle offerte par les composites conformes à l'invention.

### H) Essai 8

Dans ce dernier test d'adhésion, on compare 3 nouveaux composites notés C-28 à C-30 (voir détails au tableau 3), renforcés par les câbles R-12, R-13 et R-8.

Le composite C-28 est le témoin de référence, pourvu de l'interphase adhésive conventionnelle (renfort avec couche de laiton).

Dans le composite C-29, non conforme à l'invention, la couche de laiton a été remplacée par une couche de zinc elle-même recouvert du film d'organosilane. Cette interphase adhésive, constituée d'une couche de zinc revêtue d'un film d'organosilane, est connue et a été notamment exemplifiée dans les demandes WO00/23504 et WO00/23505 précitées, dans le but de faire adhérer une matrice de caoutchouc à des fils en acier au carbone revêtus spécifiquement de zinc.

Enfin, le composite C-30 est le composite conforme à l'invention, se différenciant uniquement du composite précédent C-29 par une couche d'alliage d'aluminium (Al-Zn contenant 10% d'Al), en lieu et place de la couche de Zn.

Le tableau 12 donne les niveaux d'adhésion initiale et après vieillissement humide et corrosif pour chacun des composites testés. La base 100 a été retenue pour le niveau d'adhésion initial enregistré sur chacun des composites (Fa égale à environ 90 daN, donc très élevée, pour chacun d'entre eux).

On note que le composite de l'invention, une fois de plus, révèle une performance non seulement très nettement améliorée par rapport à la solution conventionnelle (composite C-28 avec couche de laiton), mais encore deux fois plus élevée que la solution connue selon l'art antérieur (composite C-29). Ainsi est clairement démontrée la supériorité des oxydes-hydroxydes d'aluminium comparativement à d'autres oxydes-hydroxydes métalliques tels que des oxydes-hydroxydes de zinc.

En résumé, les tests d'adhésion des essais 1 à 8 précédents démontrent tous, quelles que soient les conditions de vieillissement humide et/ou corrosif utilisées, que les composites conformes à l'invention possèdent après vieillissement une performance adhésive nettement supérieure à celle du composite conventionnel comportant, à titre d'interphase adhésive, une couche de laiton, tout en offrant un niveau d'adhésion initial très satisfaisant puisque équivalent à celui disponible sur le composite conventionnel.

Les composites de l'invention montrent par ailleurs une performance également améliorée par rapport à d'autres composites connus utilisant une interphase adhésive non conventionnelle (autre que laiton), en particulier une couche de zinc revêtue d'un film d'organosilane.

### III-3. Tests d'endurance

Tous les résultats précédents ont été observés sous des conditions statiques de vieillissement accéléré. Ils doivent être maintenant confrontés à des tests de sollicitation dynamique, plus proches des conditions réelles d'utilisation en pneumatique ; il s'agit des tests "courroie" et de tests de roulage en pneumatique.

### A) Test courroie

Cet essai a pour but de montrer l'augmentation d'endurance en fatigue des composites conformes à l'invention, après le test de fatigue laboratoire dit "test courroie" décrit au paragraphe I-3 précédent.

Pour cet essai, on prépare deux composites ayant la forme des courroies décrites au paragraphe 1-3. Le composite témoin contient le renfort R-1 laitonné usuel tandis que le composite selon l'invention contient le renfort R-4. La matrice de caoutchouc utilisée est une composition de caoutchouc connue, à base de caoutchouc naturel et renforcée de noir de carbone, typiquement utilisée dans les armatures de carcasse des pneumatiques Poids-lourd.

Après extraction des câbles hors des courroies, comme indiqué au paragraphe I-3, on mesure la force-rupture initiale (avant fatigue) et la force-rupture résiduelle (après fatigue) pour chaque type de fil (valeurs moyennes sur 5 mesures), selon la position du fil dans le câble, et pour chacun des câbles testés.

La déchéance ΔFm observée est donnée en % dans le tableau 13 annexé, à la fois pour les 3 fils de l'âme (niveau repéré N1) et pour les 9 fils de couche externe (niveau repéré N2). Les déchéances ΔFm globales sont également mesurées sur les câbles eux-mêmes, c'est-à-dire non plus sur les fils pris isolément.

A la lecture du tableau 13, on constate que la déchéance des fils présents dans la courroie conforme à l'invention est nettement réduite (en moyenne 40% plus faible) comparativement à celle des fils présents dans la courroie témoin, ceci quel que soit le niveau considéré (N1 ou N2) ; cette amélioration sur chaque couche se répercute sur la performance et l'endurance du câble lui-même (déchéance globale ΔFm de 5,5%, pratiquement deux fois plus faible que celle du câble témoin) et donc du composite qui le contient.

Corrélativement à ces résultats, un examen microscopique des différents fils montre que les phénomènes d'usure, qui résultent du frottement répété des fils entre eux, sont nettement réduits pour les câbles extraits de la courroie conforme à l'invention.

### B) Endurance en pneumatique

Ce nouvel essai confirme les observations précédentes et démontre que l'utilisation d'un composite (métal/caoutchouc) conforme à l'invention permet d'augmenter de manière notable la longévité d'une armature carcasse d'un pneumatique radial, après un vieillissement humide accéléré.

Pour ce test, on prépare de manière connue, par calandrage, deux séries de composites se présentant sous la forme de nappes d'armature carcasse pour pneumatique radial tel que décrite au paragraphe II-4, chaque nappe étant renforcée par des câbles radiaux en acier au carbone, disposés parallèlement selon une densité d'environ 90 câbles par dm (décimètre) de nappe. La matrice de caoutchouc est une composition connue, à base de caoutchouc naturel et renforcée de noir de carbone, utilisée conventionnellement pour la fabrication des pneumatiques (module E10 égal à 6,5 MPa environ, après cuisson) ; cette composition comporte essentiellement, en plus de l'élastomère diénique et de la charge renforçante, un antioxydant, une huile d'extension, du naphténate de cobalt en tant que promoteur d'adhésion, de l'acide stéarique, de l'oxyde de zinc, du soufre et un accélérateur de vulcanisation.

On réalise avec ces renforts deux séries de pneumatiques, notées P-1 et P-2, l'armature de carcasse 7 (voir figure) de ces pneumatiques étant constituée d'une seule nappe radiale formée du tissu caoutchouté précédent, renforcée respectivement par les renforts R-14 et R-15. Ces pneumatiques sont donc identiques à l'exception des composites qui constituent leur armature de carcasse, les pneumatiques P-1 constituant la série témoin de cet essai, les pneumatiques P-2 la série conforme à l'invention.

On monte ces pneumatiques sur des jantes connues identiques et on les gonfle à la même pression (surpression), avec de l'air saturé en humidité. On fait ensuite rouler ces enveloppes sur une machine de roulage automatique, sous la même surcharge et à la même vitesse, jusqu'à la rupture de l'armature de carcasse d'au moins un des pneumatique testés.

On constate alors que, sous ces conditions très sévères de vieillissement humide accéléré, les pneumatiques P-2 conformes à l'invention supportent nettement mieux le test de roulage, parcourant une distance deux à trois fois supérieure, selon les cas, à celle parcourue par les pneumatiques témoins P-1. On note par ailleurs que le nombre de câbles rompus après roulage est très faible dans les pneumatiques P-2 selon l'invention, représentant moins de 10% du nombre de câbles rompus dans les pneumatiques P-1 selon l'art antérieur.

Des essais de traction et des observations microscopiques opérés sur les fils des câbles extraits des deux séries de pneumatiques, après le test de roulage, démontrent en outre que la déchéance moyenne de la force-rupture de ces fils, ainsi que leur usure, sont nettement inférieures dans le cas des composites conformes à l'invention.

En conclusion, comparés aux composites conventionnels à base de fils laitonnés, les composites de l'invention possèdent une interphase adhésive (métal/caoutchouc) qui offre un niveau d'adhésion initial au moins aussi bon, avec des performances très nettement améliorées après un vieillissement du type humide et/ou corrosif.

Ainsi, la longévité des pneumatiques peut être sensiblement améliorée, en particulier celle des pneumatiques pour véhicules industriels comportant usuellement des armatures de carcasse métallique soumises à des conditions de roulage particulièrement sévères, notamment sous une atmosphère humide et corrosive.

**Tableau 1**

| Renfort | Fm(N) | At (%) | Rm (MPa) |
|---|---|---|---|
| R-1 | 1340 | 2.6 | 2815 |
| R-2 | 1350 | 2.3 | 2825 |
| R-3 | 1345 | 2.4 | 2820 |
| R-4 | 1350 | 2.2 | 2825 |
| R-5 | 1335 | 2.5 | 2830 |
| R-6 | 1340 | 2.3 | 2815 |
| R-7 | 1350 | 2.4 | 2825 |
| R-8 | 1350 | 2.5 | 2820 |
| R-9 | 740 | 7.4 | 1035 |
| R-10 | 830 | 8.7 | 1105 |
| R-11 | 800 | 1.8 | 1100 |
| R-12 | 635 | 1.9 | 2700 |
| R-13 | 670 | 2.1 | 2825 |
| R-14 | 780 | 2.3 | 2830 |
| R-15 | 785 | 2.4 | 2840 |

**Tableau 2**

| Composition de caoutchouc: | M-1 | M-2 | M-3 |
|---|---|---|---|
| élastomère diénique (1) | 100 | 100 | 100 |
| noir de carbone (2) | 66 | 66 | 66 |
| antioxydant (3) | 2.2 | 2.2 | 2.2 |
| huile d'extension | 2 | 2 | 2 |
| oxyde de zinc | 7.5 | 7.5 | 7.5 |
| acide stéarique | 0.6 | 0.6 | 0.6 |
| accepteur de méthylène (4) | 1 | - | - |
| bismaléimide (5) | - | 3 | - |
| donneur de méthylène (6) | 0.4 | - | - |
| silice (7) | 5 | 5 | 5 |
| soufre | 6 | 4.5 | 4.5 |
| sulfénamide (8) | 0.7 | 0.7 | 0.7 |

| | | | |
|---|---|---|---|
| (1) caoutchouc naturel ; (2) N326 (dénomination selon norme ASTM D-1765) ; (3) N-(1,3-diméthylbutyl)-N'-phényl-p-phénylènediamine; ("Santoflex 6-PPD" de la société Flexsys); (4) résorcinol (société Sumitomo); (3) N,N'-(m-phénylène)-bismaléimide ("HVA2" - société Du Pont de Nemours); (4) HMT (hexaméthylènetétramine - société Degussa); (5) Silice ("Zeosil 1165 MP" de la société Rhodia); (6) N-dicyclohexyl-2-benzothiazol-sulfénamide ("Santocure CBS" de la société Flexsys). | | | |

**Tableau 3**

| Composite | Matrice | Renfort |
|---|---|---|
| C-1 | M-1 | R-1 |
| C-2 | M-1 | R-4 |
| | | |
| C-3 | M-1 | R-1 |
| C-4 | M-1 | R-3 |
| C-5 | M-1 | R-4 |
| | | |
| C-6 | M-2 | R-1 |
| C-7 | M-2 | R-3 |
| C-8 | M-2 | R-4 |
| | | |
| C-9 | M-1 | R-2 |
| C-10 | M-1 | R-4 |
| C-11 | M-2 | R-2 |
| C-12 | M-2 | R-4 |
| | | |
| C-13 | M-1 | R-5 |
| C-14 | M-1 | R-6 |
| C-15 | M-1 | R-8 |
| C-16 | M-2 | R-5 |
| C-17 | M-2 | R-6 |
| C-18 | M-2 | R-8 |
| | | |
| C-19 | M-3 | R-9 |
| C-20 | M-3 | R-10 |
| C-21 | M-3 | R-11 |
| | | |
| C-22 | M-1 | R-5 |
| C-23 | M-1 | R-7 |
| C-24 | M-1 | R-8 |
| C-25 | M-2 | R-5 |
| C-26 | M-2 | R-7 |
| C-27 | M-2 | R-8 |
| | | |
| C-28 | M-2 | R-12 |
| C-29 | M-2 | R-13 |
| C-30 | M-2 | R-8 |

**Tableau 4**

| Fa (u.r.) après: | 0 sem | 5 sem | 8 sem | 11 sem | 14 sem | 17 sem |
|---|---|---|---|---|---|---|
| C-1 | 100 | 89 | 42 | 39 | 35 | 34 |
| C-2 | 100 | 102 | 99 | 100 | 101 | 98 |

**Tableau 5**

| Composite | Fa (u.r.) à l'état initial | Fa (u.r.) après vieillissement |
|---|---|---|
| C-3 | 100 | 10 |
| C-4 | 95.5 | 50 |
| C-5 | 101 | 100 |

**Tableau 6**

| Composite | Fa (u.r.) à l'état initial | Fa (u.r.) après vieillissement |
|---|---|---|
| C-6 | 100 | 16 |
| C-7 | 94.7 | 29 |
| C-8 | 100 | 88 |

**Tableau 7**

| Composite | Fa (u.r.) à l'état initial | Fa (u.r.) après vieillissement |
|---|---|---|
| C-6 | 100 | 35 |
| C-7 | 93.8 | 33 |
| C-8 | 101 | 52 |

**Tableau 8**

| Composite | Fa (u.r.) à l'état initial |
|---|---|
| C-9 | 45 |
| C-10 | 100 |
| C-11 | 15 |
| C-12 | 97 |

**Tableau 9**

| Composite | Fa (u.r.) à l'état initial | Fa (u.r.) après vieillissement |
|---|---|---|
| C-13 | 100 | 9 |
| C-14 | 100 | 39 |
| C-15 | 100 | 72 |
| C-16 | 100 | 13 |
| C-17 | 100 | 14 |
| C-18 | 100 | 91 |

**Tableau 10**

| Composite | Fa (u.r.) à l'état initial | Fa (u.r.) après vieillissement |
|---|---|---|
| C-19 | 100 | 20 |
| C-20 | 104 | 20 |
| C-21 | 111 | 53 |

**Tableau 11**

| Composite | Fa (u.r.) à l'état initial | Fa (u.r.) après vieillissement |
|---|---|---|
| C-22 | 100 | 9 |
| C-23 | 100 | 32 |
| C-24 | 100 | 74 |
| C-25 | 100 | 18 |
| C-26 | 100 | 17 |
| C-27 | 100 | 72 |

**Tableau 12**

| Composite | Fa (u.r.) à l'état initial | Fa (u.r.) après vieillissement |
|---|---|---|
| C-28 | 100 | 8 |
| C-29 | 100 | 43 |
| C-30 | 100 | 83 |

**Tableau 13**

| ΔFm(%) | N1 | N2 | Câble |
|---|---|---|---|
| R-1 | 7.0 | 10.1 | 9.3 |
| R-4 | 3.9 | 6.0 | 5.5 |

## Revendications

1. Composite (métal/caoutchouc) comportant une matrice de caoutchouc renforcée par un corps métallique adhérent à la matrice de caoutchouc par l'intermédiaire d'une interphase adhésive, **caractérisé par** les points suivants :
a) la matrice de caoutchouc est à base d'élastomère diénique ;
b) le métal est un acier au carbone dont la teneur en carbone est comprise entre 0,35% et 1,20% en poids,
c) pour constituer l'interphase adhésive, cet acier au carbone est revêtu d'une couche métallique intermédiaire porteuse d'oxydes ou hydroxydes d'aluminium, elle-même recouverte d'un film d'organosilane assurant, en tant qu'agent de couplage, la liaison entre les oxydes ou hydroxydes d'aluminium d'une part, et la matrice de caoutchouc diénique d'autre part.

2. Composite selon la revendication 1, l'élastomère diénique étant choisi dans le groupe constitué par les polybutadiènes, le caoutchouc naturel, les polyisoprènes de synthèse, les copolymères de butadiène, les copolymères d'isoprène et les mélanges de ces élastomères.

3. Composite selon les revendications 1 ou 2, l'acier au carbone ayant une teneur en carbone comprise entre 0,5% et 1,1%.

4. Composite selon l'une quelconque des revendications 1 à 3, dans lequel le métal de la couche intermédiaire est de l'aluminium ou un alliage d'aluminium.

5. Composite selon l'une quelconque des revendications 1 à 4, l'agent de couplage organosilane utilisé ayant pour formule: 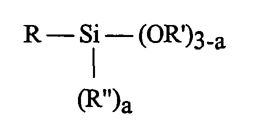 dans laquelle:
- R représente un radical organique comportant une fonction susceptible de réagir avec un constituant de la matrice de caoutchouc;
- chaque OR' représente un groupe fonctionnel susceptible de réagir avec un oxyde ou hydroxyde d'aluminium;
- chaque R" représente, de façon indépendante, l'hydrogène, un halogène, un radical organique cyclique, acyclique, ou aromatique;
- a = 0, 1 ou 2.

6. Composite selon la revendication 5, l'organosilane étant choisi dans le groupe constitué par les amino-alkyl(C₁-C₆)-alkoxy(C₁-C₆)silanes, les acryloxy-alkyl(C₁-C₆)-alkoxy(C₁-C₆)silanes, les méthacryloxy-alkyl(C₁-C₆)-alkoxy(C₁-C₆)silanes, les glycidoxy-alkyl(C₁-C₆)-alkoxy(C₁-C₆)silanes, les mercapto-alkyl(C₁-C₆)-alkoxy(C₁-C₆)silanes, les di- ou poly-sulfures d'alkyl(C₁-C₂₀)-alkoxy(C₁-C₆)silanes, les maléimido-alkyl(C₁-C₆)-alkoxy(C₁-C₆)silanes, les isomaléimido-alkyl(C₁-C₆)-alkoxy(C₁-C₆)silanes, les acides N-[alkyl(C₁-C₆)alkoxy(C₁-C₆)silyl] maléamiques, et les mélanges de ces organosilanes.

7. Composite selon la revendication 6, l'organosilane étant un amino-alkyl(C₁-C₆)-alkoxy(C₁-C₆)silane ou un maléimido-alkyl(C₁-C₆)-alkoxy(C₁-C₆)silane.

8. Composite selon la revendication 7, l'organosilane étant le 3-aminopropyltriéthoxysilane ou le 3-maléimidopropyltriéthoxysilane.

9. Composite selon l'une quelconque des revendications 2 à 8, l'élastomère diénique étant choisi dans le groupe constitué par le caoutchouc naturel, les polyisoprènes de synthèse, les copolymères d'isoprène et les mélange de ces élastomères.

10. Composite selon la revendication 9, l'élastomère diénique étant du caoutchouc naturel.

11. Composite selon l'une quelconque des revendications 1 à 10, la matrice de caoutchouc comportant en outre une résine renforçante formée d'un accepteur et d'un donneur de méthylène.

12. Composite selon la revendication 11, l'accepteur de méthylène étant le résorcinol.

13. Composite selon les revendications 11 ou 12, le donneur de méthylène étant l'hexaméthylènetétramine (HMT) ou l'hexaméthoxyméthylmélamine (H3M).

14. Composite selon l'une quelconque des revendications 1 à 10, la matrice de caoutchouc comportant en outre une bismaléimide.

15. Composite selon la revendication 14, la bismaléimide étant choisie dans le groupe constitué par les N,N'-éthylène-bismaléimides, N,N'-hexaméthylène-bismaléimides, N,N'-(m-phénylène)-bismaléimides, N,N-(p-phénylène)-bismaléimides, N,N'-(p-tolylène)-bismaléimides, N,N'-(méthylènedi-p-phénylène)-bismaléimides, N,N'-(oxydi-p-phénylène)-bismaléimides, et les mélanges de tels composés.

16. Composite selon l'une quelconque des revendications 11 à 15, la résine renforçante ou la bismaléimide étant présente à un taux compris entre 0,1% et 20% en poids de composition de caoutchouc.

17. Composite selon la revendication 16, la résine renforçante ou la bismaléimide étant présente à un taux compris entre 1% et 8% en poids de composition de caoutchouc.

18. Composite selon l'une quelconque des revendications 1 à 17, les oxydes ou hydroxydes d'aluminium étant choisis parmi les alumines, les tri-hydroxydes d'aluminium, les oxyde-hydroxydes d'aluminium et les mélanges de tels oxydes ou hydroxydes.

19. Composite selon l'une quelconque des revendications 4 à 18, l'alliage d'aluminium étant choisi parmi les alliages binaires Al-Mg, Al-Cu, Al-Ni, Al-Zn ou les alliages ternaires d'Al et de deux des éléments Mg, Cu, Ni, Zn.

20. Composite selon la revendication 19, l'alliage d'aluminium étant un alliage binaire Al-Zn.

21. Utilisation d'un composite selon l'une quelconque des revendications 1 à 20 pour la fabrication ou le renforcement d'articles ou de produits semi-finis en caoutchouc.

22. Utilisation selon la revendication 21, pour le renforcement d'une armature de sommet, de carcasse ou de la zone bourrelet d'un pneumatique radial.

23. Utilisation selon la revendication 22 pour le renforcement d'une armature de carcasse de pneumatique pour véhicule Poids-lourd.

24. Article ou produit semi-fini en caoutchouc incorporant un composite selon l'une quelconque des revendications 1 à 20.

25. Pneumatique incorporant un composite selon l'une quelconque des revendications 1 à 20.

26. Pneumatique selon la revendication 25, le composite étant présent dans l'armature de la zone bourrelet du pneumatique.

27. Pneumatique selon la revendication 25, le composite étant présent dans l'armature de carcasse du pneumatique.

28. Pneumatique selon la revendication 27, la composition de caoutchouc du composite présentant, à l'état vulcanisé, un module sécant en extension, à 10% d'allongement, qui est inférieur à 9 MPa, de préférence compris entre 4 et 9 MPa.

29. Pneumatique selon la revendication 25, le composite étant présent dans l'armature de sommet du pneumatique.

30. Pneumatique selon la revendication 29, la composition de caoutchouc du composite présentant, à l'état vulcanisé, un module sécant en extension, à 10% d'allongement, qui est supérieur à 9 MPa, de préférence compris entre 9 et 20 MPa.

31. Corps métallique en acier au carbone recouvert d'une couche adhésive capable d'adhérer à une matrice en caoutchouc à base d'élastomère diénique, **caractérisé par** les points suivants :
a) la teneur en carbone de l'acier est comprise entre 0,35% et 1,20%;
b) la couche adhésive est constituée d'une couche métallique porteuse d'oxydes ou hydroxydes d'aluminium, elle-même recouverte d'un film d'organosilane susceptible d'assurer, en tant qu'agent de couplage, la liaison entre les oxydes ou hydroxydes d'aluminium d'une part, et la matrice de caoutchouc diénique d'autre part.

32. Corps métallique selon la revendication 31, choisi parmi les fils, les assemblages de fils et les films.

33. Corps métallique selon les revendications 31 ou 32, l'acier au carbone ayant une teneur en carbone comprise entre 0,5% et 1,1%.

34. Corps métallique selon l'une quelconque des revendications 31 à 33, dans lequel le métal de la couche intermédiaire est de l'aluminium ou un alliage d'aluminium.

35. Corps métallique selon l'une quelconque des revendications 31 à 34, l'agent de couplage organosilane ayant pour formule: 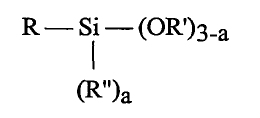 dans laquelle:
- R représente un radical organique comportant une fonction susceptible de réagir avec un constituant de la matrice de caoutchouc;
- chaque OR' représente un groupe fonctionnel susceptible de réagir avec un oxyde ou hydroxyde d'aluminium;
- chaque R" représente, de façon indépendante, l'hydrogène, un halogène, un radical organique cyclique, acyclique, ou aromatique;
- a=0, 1 ou 2.

36. Corps métallique selon la revendication 35, l'organosilane étant choisi dans le groupe constitué par les amino-alkyl(C₁-C₆)-alkoxy(C₁-C₆)silanes, les acryloxy-alkyl(C,-C₆)-alkoxy(C₁-C₆)silanes, les méthacryloxy-alkyl(C₁-C₆)-alkoxy(C₁-C₆)silanes, les glycidoxy-alkyl(C₁-C₆)-alkoxy(C₁-C₆)silanes, les mercapto-alkyl(C₁-C₆)-alkoxy(C₁-C₆)silanes, les di- ou poly-sulfures d'alkyl(C₁-C₂₀)-alkoxy(C₁-C₆)silanes, les maléimido-alkyl(C₁-C₆)-alkoxy(C₁-C₆)silanes, les isomaléimido-alkyl(C₁-C₆)-alkoxy(C₁-C₆)silanes, les acides N-[alkyl(C₁-C₆)alkoxy(C₁-C₆)silyl] maléamiques, et les mélanges de ces organosilanes.

37. Corps métallique selon la revendication 36, l'organosilane étant un amino-alkyl(C₁-C₆)-alkoxy(C₁-C₆)silane ou un maléimido-alkyl(C₁-C₆)-alkoxy(C₁-C₆)silane.

38. Corps métallique selon la revendication 37, l'organosilane étant le 3-aminopropyltriéthoxysilane ou le 3-maléimidopropyltriéthoxysilane.

39. Corps métallique selon l'une quelconque des revendications 31 à 38, les oxydes ou hydroxydes d'aluminium étant choisis parmi les alumines, les tri-hydroxydes d'aluminium, les oxyde-hydroxydes d'aluminium et les mélanges de tels oxydes ou hydroxydes.

40. Corps métallique selon l'une quelconque des revendications 31 à 39, l'alliage d'aluminium étant choisi parmi les alliages binaires Al-Mg, Al-Cu, Al-Ni, Al-Zn ou les alliages ternaires d'Al et de deux des éléments Mg, Cu, Ni, Zn.

41. Corps métallique selon la revendication 40, l'alliage d'aluminium étant un alliage binaire Al-Zn.

## Claims

1. A (metal/rubber) composite comprising a rubber matrix reinforced with a metallic body adhering to the rubber matrix by means of an adhesive interphase, **characterised by** the following features:
a) the rubber matrix is based on diene elastomer;
b) the metal is a carbon steel, the carbon content of which is between 0.35% and 1.20% by weight;
c) to constitute the adhesive interphase, this carbon steel is coated with an intermediate metallic layer bearing aluminium oxides or hydroxides, which itself is covered with an organosilane film providing, as coupling agent, the bond between the aluminium oxides or hydroxides on one hand, and the diene rubber matrix on the other hand.

2. A composite according to Claim 1, the diene elastomer being selected from the group consisting of polybutadienes, natural rubber, synthetic polyisoprenes, butadiene copolymers, isoprene copolymers and mixtures of these elastomers.

3. A composite according to Claims 1 or 2, the carbon steel having a carbon content of between 0.5% and 1.1 %.

4. A composite according to any one of Claims 1 to 3, in which the metal of the intermediate layer is aluminium or an aluminium alloy.

5. A composite according to any one of Claims 1 to 4, the organosilane coupling agent used having the formula: 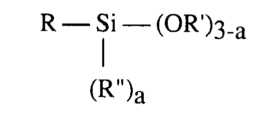 in which:
- R represents an organic radical comprising a function liable to react with a constituent of the rubber matrix;
- each OR' represents a functional group liable to react with an aluminium oxide or hydroxide;
- each R" represents, independently, hydrogen, a halogen or a cyclic, acyclic or aromatic organic radical;
- a = 0, 1 or 2.

6. A composite according to Claim 5, the organosilane being selected from the group consisting of amino-(C₁-C₆)alkyl-(C₁-C₆)alkoxysilanes, acryloxy-(C₁-C₆)alkyl-(C₁-C₆)alkoxysilanes, methacryloxy-(C₁-C₆)alkyl-(C₁-C₆)alkoxysilanes, glycidoxy-(C₁-C₆)alkyl-(C₁₋C₆)alkoxysilanes, mercapto-(C₁₋C₆)alkyl-(C₁₋C₆)alkoxysilanes, di- or polysulphides of (C₁-C₂₀)alkyl-(C₁-C₆)alkoxysilanes, maleimido-(C₁-C₆)alkyl-(C₁-C₆)alkoxysilanes, isomaleimido-(C₁-C₆)alkyl-(C₁-C₆)alkoxysilanes, N-[(C₁-C₆)alkyl-(C₁-C₆)alkoxysilyl] maleamic acids, and mixtures of these organosilanes.

7. A composite according to Claim 6, the organosilane being an amino-(C₁-C₆)alkyl-(C₁-C₆)alkoxysilane or a maleimido-(C₁-C₆)alkyl-(C₁-C₆)alkoxysilane.

8. A composite according to Claim 7, the organosilane being 3-aminopropyltriethoxysilane or 3-maleimidopropyltriethoxysilane.

9. A composite according to any one of Claims 2 to 8, the diene elastomer being selected from the group consisting of natural rubber, synthetic polyisoprenes, isoprene copolymers and mixtures of these elastomers.

10. A composite according to Claim 9, the diene elastomer being natural rubber.

11. A composite according to any one of Claims 1 to 10, the rubber matrix furthermore comprising a reinforcing resin formed of a methylene acceptor and donor.

12. A composite according to Claim 11, the methylene acceptor being resorcinol.

13. A composite according to Claims 11 or 12, the methylene donor being hexamethylenetetramine (HMT) or hexamethoxymethylmelamine (H3M).

14. A composite according to any one of Claims 1 to 10, the rubber matrix furthermore comprising a bismaleimide.

15. A composite according to Claim 14, the bismaleimide being selected from the group consisting of N,N'-ethylene/bismaleimides, N,N'-hexamethylene/bismaleimides, N,N'-(m-phenylene)-bismaleimides, N,N'-(p-phenylene)-bismaleimides, N,N'-(p-tolylene)-bismaleimides, N,N'-(methylenedi-p-phenylene)-bismaleimides, N,N'-(oxydi-p-phenylene)-bismaleimides and mixtures of such compounds.

16. A composite according to any one of Claims 11 to 15, the reinforcing resin or the bismaleimide being present in an amount of between 0.1 and 20% by weight of rubber composition.

17. A composite according to Claim 16, the reinforcing resin or the bismaleimide being present in an amount of between 1% and 8% by weight of rubber composition.

18. A composite according to any one of Claims 1 to 17, the aluminium oxides or hydroxides being selected from among aluminas, aluminium tri-hydroxides, aluminium oxide-hydroxides and mixtures of such oxides or hydroxides.

19. A composite according to any one of Claims 4 to 18, the aluminium alloy being selected from among the binary alloys Al-Mg, Al-Cu, Al-Ni, Al-Zn or ternary alloys of Al and two of the elements Mg, Cu, Ni, Zn.

20. A composite according to Claim 19, the aluminium alloy being an Al-Zn binary alloy.

21. The use of a composite according to any one of Claims 1 to 20 for the manufacture or the reinforcement of articles or semi-finished products made of rubber.

22. The use according to Claim 21, for the reinforcement of a crown reinforcement, carcass reinforcement or the bead zone of a radial tyre.

23. The use according to Claim 22 for the reinforcement of a carcass reinforcement for a heavy-vehicle tyre.

24. An article or semi-finished product made of rubber incorporating a composite according to any one of Claims 1 to 20.

25. A tyre incorporating a composite according to any one of Claims 1 to 20.

26. A tyre according to Claim 25, the composite being present in the reinforcement of the bead zone of the tyre.

27. A tyre according to Claim 25, the composite being present in the carcass reinforcement of the tyre.

28. A tyre according to Claim 27, the rubber composition of the composite having, in the vulcanised state, a secant tensile modulus, at 10% elongation, which is less than 9 MPa, preferably between 4 and 9 MPa.

29. A tyre according to Claim 25, the composite being present in the crown reinforcement of the tyre.

30. A tyre according to Claim 29, the rubber composition of the composite having, in the vulcanised state, a secant tensile modulus, at 10% elongation, which is greater than 9 MPa, preferably between 9 and 20 MPa.

31. A metallic body of carbon steel covered with an adhesive layer capable of adhering to a rubber matrix based on diene elastomer, **characterised by** the following features:
a) the carbon content of the steel is between 0.35% and 1.20%;
b) the adhesive layer is formed of a metallic layer bearing aluminium oxides or hydroxides, which itself is covered with an organosilane film capable of ensuring, as coupling agent, the bond between the aluminium oxides or hydroxides on one hand, and the diene rubber matrix on the other hand.

32. A metallic body according to Claim 31, selected from among wires, assemblies of wires and films.

33. A metallic body according to Claims 31 or 32, the carbon steel having a carbon content of between 0.5% and 1.1 %.

34. A metallic body according to any one of Claims 31 to 33, in which the metal of the intermediate layer is aluminium or an aluminium alloy.

35. A metallic body according to any one of Claims 31 to 34, the organosilane coupling agent having the formula: 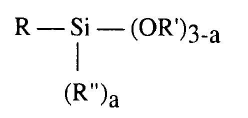 in which:
- R represents an organic radical comprising a function liable to react with a constituent of the rubber matrix;
- each OR' represents a functional group liable to react with an aluminium oxide or hydroxide;
- each R" represents, independently, hydrogen, a halogen or a cyclic, acyclic or aromatic organic radical;
- a = 0, 1 or 2.

36. A metallic body according to Claim 35, the organosilane being selected from the group consisting of amino-(C₁-C₆)alkyl-(C₁-C₆)alkoxysilanes, acryloxy-(C₁-C₆)alkyl-(C₁-C₆)alkoxysilanes, methacryloxy-(C₁-C₆)alkyl-(C₁-C₆)alkoxysilanes, glycidoxy-(C₁-C₆)alkyl-(C₁-C₆)alkoxysilanes, mercapto-(C₁-C₆)alkyl-(C₁-C₆)alkoxysilanes, di- or polysulphides of (C₁-C₂₀)alkyl-(C₁-C₆)alkoxysilanes, maleimido-(C₁-C₆)alkyl-(C₁-C₆)alkoxysilanes, isomaleimido-(C₁-C₆)alkyl-(C₁-C₆)alkoxysilanes, N-[(C₁-C₆)alkyl-(C₁-C₆)alkoxysilyl] maleamic acids, and mixtures of these organosilanes.

37. A metallic body according to Claim 36, the organosilane being an amino-(C₁-C₆)alkyl-(C₁-C₆)alkoxysilane or a maleimido-(C₁-C₆)alkyl-(C₁-C₆)alkoxysilane.

38. A metallic body according to Claim 37, the organosilane being 3-aminopropyltriethoxysilane or 3-maleimidopropyltriethoxysilane.

39. A metallic body according to any one of Claims 31 to 38, the aluminium oxides or hydroxides being selected from among aluminas, aluminium tri-hydroxides, aluminium oxide-hydroxides and mixtures of such oxides or hydroxides.

40. A metallic body according to any one of Claims 31 to 39, the aluminium alloy being selected from among the binary alloys Al-Mg, Al-Cu, Al-Ni, Al-Zn or ternary alloys of Al and two of the elements Mg, Cu, Ni, Zn.

41. A metallic body according to Claim 40, the aluminium alloy being an Al-Zn binary alloy.

## Patentansprüche

1. Verbundwerkstoff (Metall/Kautschuk), der eine Kautschukmatrix aufweist, die mit einem metallischen Körper verstärkt ist, der an der Kautschukmatrix über eine adhäsive Zwischenphase haftet, **gekennzeichnet durch** die folgenden Punkte:
a) die Kautschukmatrix basiert auf einem Dienelastomer;
b) das Metall ist ein Kohlenstoff-Stahl, dessen Kohlenstoffgehalt im Bereich von 0,35 bis 1,2 Gew.-% liegt;
c) zur Bildung der adhäsiven Zwischenphase wird dieser Kohlenstoff-Stahl mit einer metallischen Zwischenschicht beschichtet, die Aluminiumoxide oder Aluminiumhydroxide trägt, die wiederum mit einem Organosilanfilm bedeckt wird, der als Verknüpfungsmittel die Bindung zwischen den Aluminiumoxiden oder Aluminiumhydroxiden einerseits und der Dienkautschukmatrix andererseits gewährleistet.

2. Verbundwerkstoff nach Anspruch 1, wobei das Dienelastomer unter den Polybutadienen, Naturkautschuk, synthetischen Polyisoprenen, Butadien-Copolymeren, Isopren-Copolymeren und Gemischen dieser Elastomere ausgewählt ist.

3. Verbundwerkstoff nach Anspruch 1 oder 2, wobei der Kohlenstoff-Stahl einen Kohlenstoffgehalt von 0,5 bis 1,1 % aufweist.

4. Verbundwerkstoff nach einem der Ansprüche 1 bis 3, wobei das Metall der Zwischenschicht Aluminium oder eine Aluminiumlegierung ist.

5. Verbundwerkstoff nach einem der Ansprüche 1 bis 4, wobei das verwendete Organosilan-Verknüpfungsmittel die folgende Formel aufweist: 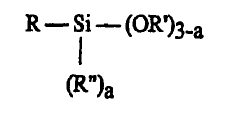 worin bedeuten:
- R eine organische Gruppe, die eine Funktion aufweist, die mit einem Bestandteil der Kautschukmatrix reagieren kann;
- jede Gruppe OR' eine funktionelle Gruppe, die mit einem Aluminiumoxid oder Aluminiumhydroxid reagieren kann;
- jede Gruppe R" unabhängig von den anderen Gruppen Wasserstoff, ein Halogen, eine cyclische, acyclische oder aromatische organische Gruppe;
- a = 0, 1 oder 2.

6. Verbundwerkstoff nach Anspruch 5, wobei das Organosilan unter Aminoalkyl(C₁₋₆)alkoxy(C₁₋₆)silanen, Acryloxyalkyl(C₁₋₆)-alkoxy(C₁₋₆)silanen, Methacryloxyalkyl(C₁₋₆)alkoxy(C₁₋₆)silanen, Glycidoxyalkyl(C₁₋₆)alkoxy(C₁₋₆)silanen, Mercaptoalkyl(C₁₋₆)-alkoxy(C₁₋₆)silanen, Di- oder Polysulfiden von Alkyl(C₁₋₂₀)alkoxy-(C₁₋₆)silanen, Maleimidoalkyl(C₁₋₆)alkoxy(C₁₋₆)silanen, Isomaleimidoalkyl(C₁₋₆)alkoxy(C₁₋₆)silanen, N-[Alkyl(C₁₋₆)alkoxy(C₁₋₆)silyl]maleinamidsäuren und den Gemischen dieser Organosilane ausgewählt ist.

7. Verbundwerkstoff nach Anspruch 6, wobei das Organosilan ein Aminoalkyl(C₁₋₆)-alkoxy(C₁₋₆)silan oder Maleimidoalkyl(C₁₋₆)-alkoxy(C₁₋₆)silan ist.

8. Verbundwerkstoff nach Anspruch 7, wobei das Organosilan das 3-Aminopropyltriethoxysilan oder das 3-Maleimidopropyltriethoxysilan ist.

9. Verbundwerkstoff nach einem der Ansprüche 2 bis 8, wobei das Dienelastomer unter Naturkautschuk, synthetischen Polyisoprenen, Copolymeren von Isopren und den Gemischen dieser Elastomere ausgewählt ist.

10. Verbundwerkstoff nach Anspruch 9, wobei es sich bei dem Dienelastomer um Naturkautschuk handelt.

11. Verbundwerkstoff nach einem der Ansprüche 1 bis 10, wobei die Kautschukmatrix ferner ein verstärkendes Harz enthält, das aus einem Methylenakzeptor und einem Methylendonor gebildet ist.

12. Verbundwerkstoff nach Anspruch 11, wobei der Methylenakzeptor Resorcin ist.

13. Verbundwerkstoff nach Anspruch 11 oder 12, wobei der Methylendonor Hexamethylentetramin (HMT) oder Hexamethoxymethylmelamin (H3M) ist.

14. Verbundwerkstoff nach einem der Ansprüche 1 bis 10, wobei die Kautschukmatrix ferner ein Bismaleimid enthält.

15. Verbundwerkstoff nach Anspruch 14, wobei das Bismaleimid unter N,N'-Ethylen-bismaleimiden, N,N'-Hexamethylen-bismaleimiden, N,N'-(*m*-Phenylen)-bismaleimiden, N,N'-(*p-*Phenylen)-bismaleimiden, N,N'-(*p*-Tolylen)-bismaleimiden, N,N'-(Methylendi-p-phenylen)-bismaleimiden, N,N'-(Oxydi-p-phenylen)-bismaleimiden und den Gemischen dieser Verbindungen ausgewählt ist.

16. Verbundwerkstoff nach einem der Ansprüche 11 bis 15, wobei das verstärkende Harz oder das Bismaleimid in einem Mengenanteil von 0,1 bis 20 Gew.-% der Kautschukmischung vorliegt.

17. Verbundwerkstoff nach Anspruch 16, wobei das verstärkende Harz oder Bismaleimid in einem Mengenanteil von 1 bis 8 Gew.-% der Kautschukmischung enthalten ist.

18. Verbundwerkstoff nach einem der Ansprüche 1 bis 17, wobei die Aluminiumoxide oder Aluminiumhydroxide unter den Aluminiumoxiden, Aluminiumtrihydroxiden, Aluminiumoxidhydroxiden und Gemischen dieser Oxide oder Hydroxide ausgewählt sind.

19. Verbundwerkstoff nach einem der Ansprüche 4 bis 18, wobei die Aluminiumlegierung unter den binären Legierungen Al-Mg, Al-Cu, Al-Ni, Al-Zn oder den ternären Legierungen von Aluminium und zwei der Elemente Mg, Cu, Ni, Zn ausgewählt ist.

20. Verbundwerkstoff nach Anspruch 19, wobei die Aluminiumlegierung eine binäre Legierung Al-Zn ist.

21. Verwendung eines Verbundwerkstoffes nach einem der Ansprüche 1 bis 20 für die Herstellung oder die Verstärkung von Gegenständen oder Halbfertigprodukten aus Kautschuk.

22. Verwendung nach Anspruch 21 für die Verstärkung einer Scheitelbewehrung, einer Karkassenbewehrung oder der Wulstzone eines Radialreifens.

23. Verwendung nach Anspruch 22 für die Verstärkung einer Karkassenbewehrung eines Luftreifens für Schwerlastfahrzeuge.

24. Gegenstand oder Halbfertigprodukt aus Kautschuk, das einen Verbundwerkstoff nach einem der Ansprüche 1 bis 20 enthält.

25. Luftreifen, der einen Verbundwerkstoff nach einem der Ansprüche 1 bis 20 enthält.

26. Luftreifen nach Anspruch 25, wobei der Verbundwerkstoff in der Bewehrung der Wulstzone des Luftreifens vorliegt.

27. Luftreifen nach Anspruch 25, wobei der Verbundwerkstoff in der Karkassenbewehrung des Luftreifens vorliegt.

28. Luftreifen nach Anspruch 27, wobei die Kautschukmischung des Verbundwerkstoffes im vulkanisierten Zustand einen Dehnungssekantenmodul bei 10 % Dehnung aufweist, der unter 9 MPa und vorzugsweise im Bereich von 4 bis 9 MPa liegt.

29. Luftreifen nach Anspruch 25, wobei der Verbundwerkstoff in der Scheitelbewehrung des Luftreifens vorliegt.

30. Luftreifen nach Anspruch 29, wobei die Kautschukmischung des Verbundwerkstoffes im vulkanisierten Zustand einen Dehnungssekantenmodul bei 10 % Dehnung aufweist, der größer als 9 MPa ist und vorzugsweise im Bereich von 9 bis 20 MPa liegt.

31. Metallischer Körper aus Kohlenstoff-Stahl, der mit einer adhäsiven Schicht bedeckt ist, die befähigt ist, an einer Kautschukmatrix auf der Basis eines Dienelastomers zu haften, **gekennzeichnet durch** die folgenden Punkte:
a) der Kohlenstoffgehalt des Stahls liegt im Bereich von 0,35 bis 1,20 %;
b) die adhäsive Schicht besteht aus einer Metallschicht, die Aluminiumoxide oder Aluminiumhydroxide trägt, die wiederum mit einem Organosilanfilm bedeckt ist, der als Verknüpfungsmittel die Bindung zwischen den Aluminiumoxiden oder Aluminiumhydroxiden einerseits und der Dienkautschukmatrix andererseits sicherstellen kann.

32. Metallischer Körper nach Anspruch 21, der unter den Drähten, Drahteinheiten und Filmen ausgewählt ist.

33. Metallischer Körper nach den Ansprüchen 31 oder 32, wobei der Kohlenstoff-Stahl einen Kohlenstoffgehalt von 0,5 bis 1,1 % aufweist.

34. Metallischer Körper nach einem der Ansprüche 31 bis 33, wobei das Metall der Zwischenschicht Aluminium oder eine Aluminiumlegierung ist.

35. Metallischer Körper nach einem der Ansprüche 31 bis 34, wobei das Organosilan-Verknüpfungsmittel die folgende Formel aufweist: 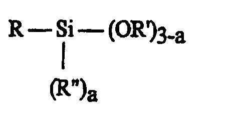 worin bedeuten:
- R eine organische Gruppe, die eine Funktion aufweist, die mit einem Bestandteil der Kautschukmatrix reagieren kann;
- jede Gruppe OR' eine funktionelle Gruppe, die mit einem Aluminiumoxid oder Aluminiumhydroxid reagieren kann;
- jede Gruppe R" unabhängig von den anderen Gruppen Wasserstoff, ein Halogen, eine cyclische, acyclische oder aromatische organische Gruppe;
- a = 0, 1 oder 2.

36. Metallischer Körper nach Anspruch 35, wobei das Organosilan unter Aminoalkyl(C₁₋₆)alkoxy(C₁₋₆)silanen, Acryloxyalkyl(C₁₋₆)-alkoxy(C₁₋₆)silanen, Methacryloxyalkyl(C₁₋₆)alkoxy(C₁₋₆)silanen, Glycidoxyalkyl(C₁₋₆)alkoxy(C₁₋₆)silanen, Mercaptoalkyl(C₁₋₆)-alkoxy(C₁₋₆)silanen, Di- oder Polysulfiden von Alkyl(C₁₋₂₀)-alkoxy(C₁₋₆)silanen, Maleimidoalkyl(C₁₋₆)alkoxy(C₁₋₆)silanen, Isomaleimidoalkyl(C₁₋₆)alkoxy(C₁₋₆)silanen, N-[Alkyl(C₁₋₆)alkoxy-(C₁₋₆)silyl]maleinamidsäuren und den Gemischen dieser Organosilane ausgewählt ist.

37. Metallischer Körper nach Anspruch 36, wobei das Organosilan ein Aminoalkyl(C₁₋₆)alkoxy(C₁₋₆)silan oder Maleimidoalkyl(C₁₋₆)-alkoxy(C₁₋₆)silan ist.

38. Metallischer Körper nach Anspruch 37, wobei das Organosilan das 3-Aminopropyltriethoxysilan oder 3-Maleimidopropyltriethoxysilan ist.

39. Metallischer Körper nach einem der Ansprüche 31 bis 38, wobei die Aluminiumoxide oder Aluminiumhydroxide unter den Aluminiumoxiden, Aluminiumtrihydroxiden, Aluminiumoxidhydroxiden und Gemischen dieser Oxide oder Hydroxide ausgewählt sind.

40. Metallischer Körper nach einem der Ansprüche 31 bis 39, wobei die Aluminiumlegierung unter den binären Legierungen Al-Mg, Al-Cu, Al-Ni, Al-Zn oder den ternären Legierungen von Al und zwei der Elemente Mg, Cu, Ni, Zn ausgewählt ist.

41. Metallischer Körper nach Anspruch 40, wobei die Aluminiumlegierung eine binäre Legierung Al-Zn ist.
